(19) Europäisches Patentamt
European Patent Office
Office européen des brevets

(11) EP 3 781 622 B1

(12) EUROPÄISCHE PATENTSCHRIFT

(45) Veröffentlichungstag und Bekanntmachung des Hinweises auf die Patenterteilung:
**12.10.2022 Patentblatt 2022/41**

(21) Anmeldenummer: **19715504.7**

(22) Anmeldetag: **10.04.2019**

(51) Internationale Patentklassifikation (IPC):
***C08K 5/07*** (2006.01) ***C08K 5/26*** (2006.01)
***C09J 133/10*** (2006.01) ***C09J 133/26*** (2006.01)

(52) Gemeinsame Patentklassifikation (CPC):
(C-Sets verfügbar)
**C09J 133/26; C08K 5/07; C08K 5/26; C09J 133/10**

(Forts.)

(86) Internationale Anmeldenummer:
**PCT/EP2019/059042**

(87) Internationale Veröffentlichungsnummer:
**WO 2019/201696 (24.10.2019 Gazette 2019/43)**

(54) **HAFTKLEBSTOFFZUSAMMENSETZUNG MIT AUF VERNETZUNG ÜBER KETO- ODER ALDEHYDGRUPPEN BERUHENDEM GELGEHALT**

ADHESIVE COMPOSITIONS WITH A GELCONTENT FROM CROSSLINKING OF KETO- OR ALDEHYDE GROUPS

COMPOSITIONS ADHÉSIVES À GELCONTENT DE RÉTICULATION DE GROUPES CÉTO OU ALDÉHYDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2018 EP 18168569**

(43) Veröffentlichungstag der Anmeldung:
**24.02.2021 Patentblatt 2021/08**

(73) Patentinhaber: **BASF SE**
**67056 Ludwigshafen (DE)**

(72) Erfinder:
- **GERST, Matthias**
**67056 Ludwigshafen (DE)**
- **WULFF, Dirk**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-A1- 1 712 573** **EP-A1- 2 284 237**
**EP-A1- 3 202 795** **EP-A2- 0 849 295**
**WO-A1-02/00788** **WO-A1-92/01761**
**WO-A1-93/25519** **WO-A1-93/25588**
**WO-A1-2005/047342** **WO-A1-2006/042220**
**WO-A1-2006/066761** **WO-A1-2007/125040**
**WO-A1-2008/049804** **WO-A1-2008/071687**
**WO-A1-2008/071801** **WO-A1-2009/115607**
**WO-A1-2009/120420** **WO-A1-2009/152126**
**WO-A1-2010/063599** **WO-A1-2011/054719**
**WO-A1-2011/069950** **WO-A1-2011/101395**
**WO-A1-2011/113782** **WO-A1-2011/124651**
**WO-A1-2011/125918** **WO-A1-2011/154920**
**WO-A1-2012/028627** **WO-A1-2012/038202**
**WO-A1-2012/130712** **WO-A1-2012/175433**
**WO-A1-2012/176544** **WO-A1-2012/177337**
**WO-A1-2014/005862** **WO-A1-2014/053410**
**WO-A1-2014/073371** **WO-A1-2014/154483**
**WO-A1-2014/154507** **WO-A1-2014/184057**
**WO-A1-2015/119873** **WO-A1-2015/195355**
**WO-A1-2016/000938** **WO-A1-2016/040773**
**WO-A1-2016/084973** **WO-A1-2016/110367**
**WO-A1-2016/146427** **WO-A1-2016/169788**
**WO-A1-2016/209916** **WO-A1-2017/102497**
**WO-A1-2017/125277** **WO-A1-2018/016416**
**WO-A1-2018/019977** **WO-A2-03/060029**
**WO-A2-2005/070866** **WO-A2-2008/116033**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

WO-A2-2011/073221
WO-A2-2011/082965
WO-A2-2016/042116
CA-A- 760 491
CA-C- 1 277 083
CN-A- 1 163 279
DE-A1- 3 325 898
DE-A1- 4 237 030
DE-A1- 4 306 392
DE-A1- 4 314 623
DE-A1- 4 334 178
DE-A1- 4 439 457
DE-A1- 10 135 379
DE-A1- 10 244 087
DE-A1- 19 606 392
DE-A1-102005 037 113
DE-A1-102010 041 272
JP-A- H0 532 947
JP-A- H0 543 855
JP-A- H0 578 636
JP-A- H0 641 499
JP-A- H0 656 916
JP-A- H0 726 229
JP-A- H0 853 504
JP-A- H0 931 138
JP-A- H0 940 880
JP-A- H0 940 927
JP-A- S6 210 145
JP-A- S6 286 073
JP-A- S6 289 781
JP-A- H01 242 676
JP-A- H02 238 078
JP-A- H02 305 880
JP-A- H05 125 342
JP-A- H05 186 758
JP-A- H05 320 299
JP-A- H06 100 849
JP-A- H06 158 010
JP-A- H06 336 583
JP-A- H06 346 026
JP-A- H07 102 228
JP-A- H07 133 461
JP-A- H07 188 353
JP-A- H07 188 629
JP-A- H07 207 243
JP-A- H07 216 005
JP-A- H08 283 678
JP-A- H09 176 369
JP-A- H09 176 605
JP-A- H09 194 812
JP-A- H09 286 963
JP-A- H09 323 969
JP-A- H10 152 418
JP-A- H10 176 122
JP-A- H10 219 221
JP-A- H10 231 325
JP-A- H10 237 142
JP-A- H10 279 768
JP-A- H10 330 693
JP-A- S57 126 401
JP-A- S58 127 760
JP-A- S58 176 283
JP-A- S61 266 480
JP-A- S63 317 575
JP-A- 2003 313 528
JP-A- 2005 281 548
JP-A- 2006 008 833
JP-A- 2006 008 834
JP-A- 2017 014 390
JP-A- 2019 014 852
RU-C1- 2 676 609
TW-A- 200 923 045
US-A- 4 524 104
US-A- 4 540 739
US-A- 4 759 983
US-A- 4 767 813
US-A- 4 939 190
US-A- 5 356 996
US-A- 5 435 879
US-A1- 2011 143 157
US-A1- 2012 077 030
US-A1- 2012 095 131
US-A1- 2013 005 911
US-A1- 2014 031 486
US-A1- 2014 178 682
US-A1- 2015 132 567
US-A1- 2017 362 425

(52) Gemeinsame Patentklassifikation (CPC): (Forts.)

C-Sets
**C09J 133/10, C08K 5/07, C08K 5/25, C08L 2312/00;**
**C09J 133/26, C08K 5/07, C08K 5/25, C08L 2312/00**

## Beschreibung

Die Erfindung betrifft eine Haftklebstoffzusammensetzung in Form einer wässrigen Polymerdispersion enthaltend Tackifier, eine über Keto- oder Aldehydgruppen vernetzende Verbindung und ein Haftklebstoffpolymer, welches gebildet ist durch Emulsionspolymerisation aus weichen (Meth)acrylsäureestermonomeren, Säuremonomeren, Monomeren mit Keto- oder Aldehydgruppen, Styrol und optional weiteren Monomeren, wobei die Polymerisation in Gegenwart von Molekulargewichtsreglern erfolgen kann. Das Haftklebstoffpolymer weist bestimmte Gelgehalte auf. Die Haftklebstoffzusammensetzung kann verwendet werden zur Herstellung von Klebeetiketten, Klebebändern oder Klebefolien.

Haftklebstoffe für Anwendungen z. B. in Klebebändern oder Klebefolien gibt es auf Basis von Polymerlösungen in organischen Lösungsmitteln und auf Basis von wässrigen Polymerdispersionen, welche durch Emulsionspolymerisation erhältlich sind. Es ist gewünscht, vermehrt wässrige Systeme einzusetzen und auf organische Lösungsmittel zu verzichten. Allerdings sind die Klebeeigenschaften von Emulsionspolymerisaten noch nicht in jeder Hinsicht gleichwertig mit in organischen Lösungsmitteln hergestellten Klebstoffpolymeren, was sich durch einen Marktanteil der Lösungsmittelklebstoffe von ca. 50 - 60 %, je nach Anwendungsgebiet, zeigt. Lösungspolymere sind in der Regel weitestgehend unverzweigt und unvernetzt, weisen ein vergleichsweise hohes Molekulargewicht auf und bilden bei der Beschichtung von Substraten sehr homogene Klebstofffilme, in denen die langen Polymerketten verschlaufen können, was zu einer vergleichsweise hohen Kohäsion führt. Bei der Emulsionspolymerisation bilden sich herstellungsbedingt in der Regel Polymere mit höherem Verzweigungs- und Vernetzungsgrad als bei der Lösungspolymerisation. Der Verzweigungs- und Vernetzungsgrad ist messbar durch Messung des Gelgehalts. Je höher der Verzweigungs- und Vernetzungsgrad eines Polymers, umso höher ist dessen Gelgehalt. Der Gelgehalt ist der in Methylethylketon unlösliche Anteil eines aus einem Polymer hergestellten Polymerfilms. Bei der Verfilmung von Emulsionspolymerisaten bilden sich häufig heterogene Filme mit mikroskopisch erkennbaren Grenzflächen, die auf die Dispersionspartikel zurückzuführen sind, was insgesamt die Kohäsion gegenüber Lösungsmittelpolymerisaten verringert und die Wasserbeständigkeit verschlechtert. Da die Vernetzung von Emulsionspolymerisaten überwiegend innerhalb der Dispersionspartikel vorliegt aber nicht zwischen Polymerketten in unterschiedlichen Dispersionspartikeln, ist eine Vernetzung oder Verschlaufung von Polymerketten über die Grenzflächen der Dispersionspartikel hinweg bei hohem Gelgehalt stark beeinträchtigt, was eine Verbesserung der Kohäsion von Haftklebstoffen auf Basis von Emulsionspolymerisaten schwierig macht. Wünschenswert ist deshalb die Vermeidung von zu Vernetzung oder Verzweigung führenden Nebenreaktionen während der Emulsionspolymerisation. Im Falle von sehr schnell polymerisierenden Acrylatmonomeren sind derartige Nebenreaktionen normalerweise nicht zu vermeiden. In der Regel liegen während der radikalischen Emulsionspolymerisation von Acrylatmonomeren in einem Dispersionsteilchen hohe Mengen an Polymer und nur sehr geringe Mengen an Acrylatmonomeren vor, da Acrylatmonomere sehr schnell abreagieren. Ein in ein Dispersionsteilchen eintretendes freies Radikal findet deshalb überwiegend Polymer (z. B. ca. 95 %) und nur wenig Monomer (z. B. ca. 5 %) vor, was zu unerwünschten Reaktionen mit dem Polymer führt, z. B. H-Abstraktionen von den Polymerketten und anschließenden Pfropfungs-, Verzweigungs- oder Vernetzungsreaktionen. Deshalb ist nach Beendigung der Emulsionspolymerisation von Acrylatmonomeren ein erheblicher Anteil der Polymerketten (z. B. ca. 60 - 80 %, entsprechend dem Gelgehalt) innerhalb eines Dispersionspartikels miteinander verknüpft und können deshalb bei der bei Anwendung als Klebstoff notwendigen Filmbildung nicht über Partikelgrenzen hinweg diffundieren. Nur der sehr geringe Anteil (ca. 20 %) an überwiegend linearen, löslichen, nicht zum Gelgehalt beitragenden Polymerketten sind hierzu in der Lage. Dies limitiert die Kohäsionskräfte bei Haftklebstoffanwendungen.

Eine Reduzierung von zu Vernetzungen führenden Nebenreaktionen während der Emulsionspolymerisation von Acrylatmonomeren ist durch die Verwendung von Molekulargewichtsreglern möglich. Allerdings führt die Verwendung von Molekulargewichtsregler zu kurzen Polymerketten mit niedrigem Molekulargewicht, was wiederum eine unerwünschte Limitierung der Kohäsionskräfte bei Haftklebstoffanwendungen bewirkt.

Eine Reduzierung von zu Vernetzungen führenden Nebenreaktionen während der Emulsionspolymerisation ist auch durch die Mitverwendung von Comonomeren möglich, die langsamer reagieren als Acrylatmonomere, z.B. Styrol. Die Verwendung von erheblichen Mengen an Styrol kann dazu führen, dass ein in ein Dispersionsteilchen eintretendes freies Radikal deutlich mehr Monomer (z. B. ca. 50 %) vorfindet und weniger Polymer (z. B. ca. 50 %) als bei der Emulsionspolymerisation von reinen Acrylatmonomeren. Allerdings handelt es sich bei Styrol um ein sogenanntes "hartes" Monomer, weil es zu Polymeren mit vergleichsweise hoher Glasübergangstemperatur Tg führt (die Tg von Polystyrol ist ca. 105 °C), was für Haftklebstoffanwendungen ungünstig ist. Haftklebstoffpolymere haben üblicherweise eine sehr niedrige Tg, z. B. - 40 °C oder niedriger. Eine höhere Tg bewirkt unerwünscht niedrigere Adhäsion und niedrigere Klebrigkeit. Ein Zusatz an Tackifiern kann zwar die Klebrigkeit erhöhen, beeinträchtigt aber in der Regel gleichzeitig die Kohäsion, sodass die Herstellung von hochkohäsiven Haftklebstoffe bei Verwendung von Tackifiern eine besondere Herausforderung darstellen.

Die Verwendung eines Vernetzersystems beruhend auf der Reaktion von Carbonylgruppen eines Klebstoffpolymers mit Dihydraziden ist bekannt z.B. aus WO 2017/216108, WO 2006/066761, EP 3202795, WO 2003/01193, EP 900651 und WO 2017/125277. Hierbei handelt es sich entweder nicht um Haftklebstoffe oder es handelt sich um Polymere

mit hohem Gelgehalt $Gel_0$ vor der Carbonyl/Hydrazidvernetzung. Ein hoher Gelgehalt $Gel_0$ vor der Carbonyl/Hydrazidvernetzung bewirkt, dass ein hoher Anteil von Polymerketten bereits vernetzt ist, deshalb nicht aus dem Dispersionspartikel herausdiffundieren kann und deshalb die (zusätzliche) Carbonyl/Hydrazidvernetzung im Wesentlichen innerhalb des Dispersionspartikels erfolgt. Hierdurch ist die kohäsionssteigernde Wirkung der zusätzlichen Vernetzung stark limitiert. Ein weiterer Haftklebstoff ist aus JP-A-2005/281548 bekannt.

Aufgabe der vorliegenden Erfindung war es, polymere Haftklebstoffe auf wässriger Basis zur Verfügung zu stellen, d.h. ohne organische Lösungsmittel, die vorzugsweise als stabile, Einkomponentenzusammensetzung vorliegen, gute Klebeeigenschaften aufweisen, insbesondere eine verbesserte Kohäsion, ähnlich derjenigen von Lösungspolymerisaten, ohne die Adhäsion und Klebrigkeit wesentlich zu beeinträchtigen, und die möglichst einfach und kostengünstig herstellbar sind.

Gegenstand der Erfindung ist eine Haftklebstoffzusammensetzung in Form einer wässrigen Polymerdispersion enthaltend

(a) mindestens einen Tackifier,
(b) mindestens eine Verbindung A, welche mindestens zwei funktionelle Gruppen aufweist, die mit Ketogruppen oder mit Aldehydgruppen eine Vernetzungsreaktion eingehen können;
(c) mindestens ein Haftklebstoffpolymer, welches gebildet ist durch Emulsionspolymerisation aus

(i) mindestens 60 Gew.% bezogen auf die Summe der Monomere, mindestens eines weichen (Meth)acrylsäureestermonomers, welches, wenn es als Homopolymer polymerisiert ist, eine Glasübergangstemperatur von weniger als 0°C aufweist,
(ii) 0,1 bis 10 Gew.%, bezogen auf die Summe der Monomere, mindestens eines Monomeren mit mindestens einer Säuregruppe,
(iii) mindestens 5 und weniger als 20 Gew.%, bezogen auf die Summe der Monomere, Styrol,
(iv) 0,3 bis 5 Gew.%, bevorzugt 0,4 bis 3 Gew.%, bezogen auf die Gesamtmenge an Monomeren, mindestens einer ethylenisch ungesättigten Verbindung K mit mindestens einer funktionellen Gruppe, ausgewählt aus Ketogruppen und Aldehydgruppen;
(v) optional weitere, von (i) bis (iv) verschiedene Monomere,

ausgenommen Monomere mit mindestens zwei nichtkonjugierten polymerisierbaren Vinylgruppen,
wobei die Polymerisation in Gegenwart von 0 bis 1 Gewichtsteilen Molekulargewichtsregler pro 100 Gewichtsteile Monomere erfolgt,
wobei das Haftklebstoffpolymer nach Filmbildung auf einem Substrat einen Gelgehalt $Gel_{ges}$ von mindestens 80 Gew.%, bezogen auf einen aus dem Haftklebstoffpolymer hergestellten Polymerfilm, aufweist,
wobei der Gelgehalt zumindest teilweise auf einer Vernetzung der Keto- oder Aldehydgruppen des Polymers mit Verbindung A beruht und der auf Vernetzung der Keto- oder Aldehydgruppen des Polymers mit Verbindung A beruhende Gelgehalt $Gel_K$ des Haftklebstoffpolymers mindestens 30 Gew.% beträgt,
wobei der Gelgehalt teilweise auch auf kovalenter, irreversibler, nicht durch Vernetzung der Keto- oder Aldehydgruppen des Polymers mit Verbindung A bewirkter Vernetzung beruhen kann und der auf kovalenter, irreversibler, nicht durch Vernetzung der Keto- oder Aldehydgruppen des Polymers mit Verbindung A bewirkte Gelgehalt $Gel_0$ des Haftklebstoffpolymers von 0 bis kleiner oder gleich 50 Gew.% beträgt, und wobei die Glasübergangstemperatur des Polymers vor Vernetzung der Keto- oder Aldehydgruppen des Polymers mit Verbindung A kleiner als 10 °C, vorzugsweise kleiner - 15 °C und größer - 40 °C ist; und
wobei die Haftklebstoffzusammensetzung nach Trocknung einen Film bildet mit einer Klebrigkeit von größer oder gleich 10 N/25mm, gemessen als Loop Tack gegenüber einer Stahloberfläche bei 23 °C, 50 % relativer Luftfeuchte und mit einer Abzugsgeschwindigkeit von 300 mm/min.

Die Gew.-%-Angaben der Monomere beziehen sich jeweils auf die Summe aller bei der Polymerisation eingesetzten Monomere, sofern nichts anderes angegeben ist.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Ein Einkomponentenklebstoff ist ein Klebstoff, dem vor der Anwendung keine weitere Komponente zugefügt wird und der lagerstabil ist, wobei bei Lagerung von 5 Tagen bei 20 °C die Viskositätsänderung vorzugsweise kleiner ist als 100 %, bezogen auf die Ausgangsviskosität. Vorzugsweise überschreitet der Anteil an Koagulatbildung (abfiltrierbar

mit einem Filter mit 250 μm Maschenbreite) nicht 5 Gew.-%, bezogen auf den Feststoffgehalt der Dispersion. Die Viskosität wird gemessen mit einem Kegel-Platte-Rotationsviskosimeter (z. B. Rheometer "MCR 301" von Anton Paar, Messaufbau CP25-1-SN12203) bei 23°C, konstante Scherrate 1 $s^{-1}$, Spaltbreite d = 0,05 mm.

Die Glasübergangstemperatur wird durch Differential Scanning Calorimetrie (ASTM D 3418-08, sogenannte "midpoint temperature") bestimmt. Die Glasübergangstemperatur des Polymerisats der Polymerdispersion ist die bei Auswertung der zweiten Heizkurve (Heizrate 20° C/min) erhaltene Glasübergangstemperatur.

Der Gelgehalt wird gemessen, indem aus einer Polymerdispersion ein Polymerfilm hergestellt und einen Tag bei Raumtemperatur (20 °C) und 4 Tage bei 50 °C getrocknet wird. Anschließend wird der Film mit der 99fachen Masse an Methylethylketon versetzt und 4 Tage bei Raumtemperatur gelagert. Es wird über einen tarierten 125 μm Perlonfilter abfiltriert, der Filter bei Raumtemperatur getrocknet, bis er frei von Lösemittel ist und dann nochmals für eine Stunde bei 50 °C nachgetrocknet. Der Gelanteil ist der durch Zurückwiegen bestimmte, in Methylethylketon unlösliche Anteil.

Der (Gesamt-)Gelgehalt $Gel_{ges}$ des Haftklebstoffpolymers wird nach der Zugabe der Verbindung A und nach Filmbildung, Trocknung und Aushärtung des Polymerfilms bestimmt. Der auf kovalenter, irreversibler, nicht durch Vernetzung der Keto- oder Aldehydgruppen des Polymers mit Verbindung A bewirkte Gelgehalt $Gel_0$ des Haftklebstoffpolymers wird bestimmt nach Filmbildung und Trocknung für ein Haftklebstoffpolymer ohne Zugabe der Verbindung A. Der auf Vernetzung der Keto- oder Aldehydgruppen des Polymers mit Verbindung A beruhende Gelgehalt $Gel_K$ des Haftklebstoffpolymers ist die Differenz von $Gel_{ges}$ und $Gel_0$, d.h. $Gel_K = Gel_{ges} - Gel_0$.

Optional kann der Gesamtgelgehalt $Gel_{ges}$ zusätzlich noch einen Anteil an auf einer reversiblen Vernetzung durch Metallsalze beruhenden Gelgehalt $Gel_M$ enthalten. Für diesen Fall ist $Gel_{ges} = Gel_0 + Gel_K + Gel_M$

Die reversible Vernetzung erfolgt dabei nicht über kovalente Bindungen sondern über Ionenbindungen oder Komplexbildung zwischen Säuregruppen des Polymers und mindestens zweiwertigen Metallkationen. Der Gelgehalt $Gel_M$, der auf einer reversiblen Vernetzung durch Metallsalze beruht beträgt z.B. von 0 bis 40 Gew.-%, von 0 bis 20 Gew.-%, oder von 0 bis 10 Gew.-%, vorzugsweise 0 Gew.-%.

Die Metallsalzvernetzung kann durch Zugabe geeigneter Metallsalze nach der Polymerisation erfolgen. Geeignete Metallsalze sind z. B. solche mit den Metallkationen $Al^{3+}$, $Zn^{2+}$, $Ti^{4+}$, $Ca^{2+}$, $Fe^{2+}$, $Fe^{3+}$und $Zr^{4+}$. Geeignete Gegenionen sind z.B. Acetylacetonate, Hydroxide, Oxalate, Lactat, Gycinat, Acetat und auch Carboxylatgruppen oder 2-(Methacryloyloxy)ethylacetoacetatgruppen aufweisende Acrylatoligomere mit einer Molmasse bis 50.000 g/mol. Geeignete Metallsalze sind z.B. Aluminiumacetylacetonat $Al(acac)_3$, Titandiisopropoxid-bis(acetylacetonat) $Ti(acac)_2OiPr_2$, Diammonium-bis[carbonato-O]-dihydroxyzirconat (Bacote® 20), Eisen(II)oxalat, Calciumhydroxid oder Zinkhydroxid, z.B. $Zn(OH)_2/NH_3$. Bevorzugt ist das Metallsalz ausgewählt aus Zinksalzen und Aluminiumsalzen, vorzugsweise den Acetylacetonaten, insbesondere $Al(acac)_3$. Bevorzugte Metallsalze haben eine Wasserlöslichkeit von kleiner als 10 g/l (bei 25 °C).

Die Metallsalzvernetzung kann auch durch direkten Einbau von Metallsalzen während der Emulsionspolymerisation durch Copolymerisation mit geeigneten metallorganischen Comonomeren erfolgen. Die Menge an solchen metallorganischen Comonomeren beträgt vorzugsweise 0 bis 3 Gew.-%, z.B. von 0,1 bis 2,5 Gew.-% bezogen auf die Summe aller Monomere. Geeignete metallorganische Comonomere sind z. B. Aluminiumacrylat $Al(AS)_3$, Aluminummethacrylat $Al(MAS)_3$, Zinkacrylat $Zn(AS)_2$, Zinkmethacrylat $Zn(MAS)_2$, Titan(IV)acrylat und Titan(IV)methacrylat. Vorzugsweise werden keine metallorganischen Comonomeren eingesetzt.

Die Menge an weichem (Meth)acrylsäureestermonomer (i) beträgt mindestens 60 Gew.-%, vorzugsweise mindestens 65 Gew.-%, z.B. von 65 bis 94 Gew.-% oder von 80 bis 93 Gew.-%. Die weichen Monomere (i) sind vorzugsweise ausgewählt aus Acrylsäureestern, insbesondere aus C2- bis C10 Alkylacrylaten, oder aus $C_4$- bis $C10_{10}$-Alkylacrylaten oder aus $C_4$- bis $C_8$-Alkylacrylaten. Geeignet sind z.B. Ethylacrylat, n-Butylacrylat, n-Hexylacrylat, Heptylacrylat, Octylacrylat und 2-Ethylhexylacrylat sowie Mischungen dieser Monomere. Bevorzugt sind Ethylacrylat, n-Butylacrylat und 2-Ethylhexylacrylat und deren Mischungen, besonders bevorzugt n-Butylacrylat und 2-Ethylhexylacrylat und deren Mischungen.

Das Haftklebstoffpolymer wird aus einer weiteren Monomerart (ii) hergestellt. Die Monomerart (ii) kann zu 0,1 bis 10 Gew.-%, vorzugsweise 0,2 bis 8 Gew.-%, oder 0,5 bis 6 Gew.-% bezogen auf die Gesamtmenge der zur Herstellung des Polymers eingesetzten Monomere, enthalten sein. Monomere (ii) sind Monomeren mit mindestens einer Säuregruppe (Säuremonomere), d.h. ethylenisch ungesättigte Säuren oder ethylenisch ungesättigte Säureanhydride und sind radikalisch polymerisierbar. Geeignete Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure, Methacrylsäure und Itaconsäure und deren Gemisch, besonders bevorzugt ist Methacrylsäure.

Das Haftklebstoffpolymer wird u.a. aus Styrol hergestellt. Styrol (iii) wird in einer Menge von mindestens 5 und

weniger als 20 Gew.-%, vorzugsweise von 6 bis 19 Gew.-% oder von 7 bis 18 Gew.-%, bezogen auf die Summe der Monomere eingesetzt.

Das Haftklebstoffpolymer wird aus mindestens einer ethylenisch ungesättigten Verbindung K mit mindestens einer funktionellen Gruppe, ausgewählt aus Ketogruppen und Aldehydgruppen hergestellt. Die Menge an Monomeren K beträgt 0,3 bis kleiner oder gleich 5 Gew.-%, bevorzugt 0,3 bis kleiner oder gleich 4 oder 0,4 bis kleiner oder gleich 3 Gew.-%, bezogen auf die Gesamtmenge an Monomeren. Verbindungen K sind z. B. Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto- oder Aldehydgruppen, bzw. einer Aldehyd- und einer Ketogruppe im Alkylrest wobei der Alkylrest vorzugsweise insgesamt 3 bis 10 C-Atome umfasst, z.B. (Meth)acryloxyalkylpropanale, wie sie z.B. in der DE-A 2 722 097 beschrieben sind. Des Weiteren eignen sich auch N-Oxoalkyl(meth)acrylamide wie sie z.B. aus der DE-A 2 061 213 oder DE-A 2 207 209 bekannt sind, z.B. solche der Formel R-C(=O)-R'-NH-C(=O)-CR"=$CH_2$, wobei R und R" unabhängig voneinander Wasserstoff oder eine Kohlenwasserstoffgruppe (vorzugsweise Alkyl) mit 1 bis 10 C-Atomen bedeuten und R' eine Kohlenwasserstoffgruppe (vorzugweise Alkylen) mit 2 bis 15 C-Atomen bedeutet. Besonders bevorzugt sind Acetoacetyl(meth)acrylat, Acetoacetoxyethyl(meth)acrylat und insbesondere Diacetonacrylamid.

Optional können weitere, von den Monomeren (i) bis (iv) verschiedene Monomere (v) eingesetzt werden. Die weiteren Monomere (v) sind copolymerisierbare, ethylenisch ungesättigte Verbindungen. Die optionalen Monomere (v) werden vorzugsweise in Mengen von 0 bis kleiner oder gleich 10 Gew.-%, von 0,1 bis 10 Gew.-%, von 1 bis 10 Gew.-% oder von 1 bis kleiner oder gleich 8 Gew.-%, bezogen auf die Summe der Monomere, eingesetzt. Die Monomere (v) sind vorzugsweise ausgewählt aus der Gruppe bestehend aus von den Monomeren (i) bis (iv) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und (Meth)acrylamiden oder Mischungen dieser Monomere. Als weitere Monomere seien darüber hinaus Phenyloxyethylglykolmono-(meth)acrylat, Glycidyl(meth)acrylat, Aminoalkyl(meth)acrylate wie z. B. 2-Aminoethyl-(meth)acrylat genannt. Alkylgruppen weisen vorzugsweise von 1 bis 20 C-Atome auf. $C_1$-$C_{20}$-Alkyl(meth)acrylate weisen 1-20 C-Atome in den Alkylgruppen auf. $C_1$-$C_{10}$-Hydroxyalkyl(meth)acrylate weisen 1-10 C-Atome in den Hydroxyalkylgruppen auf.

C1 bis C20 Alkyl(meth)acrylate sind z. B. Methylacrylat und Methylmethacrylat. Hydroxylgruppen enthaltende Monomere sind z. B. $C_1$-$C_{10}$-Hydroxyalkyl(meth)acrylate. Vinylester von Carbonsäuren mit 1 bis 20 C-Atomen sind z. B. Vinylacetat, Vinyllaurat, Vinylstearat, Vinylpropionat und Versaticsäurevinylester. Als vinylaromatische Verbindungen kommen Vinyltoluol, alpha- und p-Methylstyrol, alpha-Butylstyrol, 4-n-Butylstyrol, 4-n-Decylstyrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren.

Als weitere Monomere (v) bevorzugt sind Methylacrylat, Methylmethacrylat, Vinylester, insbesondere Vinylacetat und deren Mischungen sowie C2 bis C10 Hydroxyalkyl-(meth)acrylate. Ganz besonders bevorzugt sind Methylacrylat, Methylmethacrylat, Vinylacetat und Hydroxypropylacrylat sowie Mischungen dieser Monomere.

Ausgenommen von den Monomeren zur Herstellung des Haftklebstoffpolymers sind Monomere mit mindestens zwei nichtkonjugierten polymerisierbaren Vinylgruppen, insbesondere solchen, die zu den Gelgehalt erhöhenden Verzweigungen oder Vernetzungen führen können. Derartige ausgeschlossene Monomere sind z.B. mehrfunktionelle Acrylate oder mehrfunktionelle Methacrylate, insbesondere Alkandioldi(meth)acrylate mit z. B. 2 bis 8 C-Atomen in der Alkangruppe, insbesondere Ethylenglycoldiacrylat, Propylenglycoldiacrylat, Polyethyleneglycoldiacrylat, Hexandioldiacrylat, Ethylenglycodimethacrylat, Diethylenglycoldimethacrylat, 1,3 Butanglycoldimethacrylat, Tri(meth)-acrylate, insbesondere Trimethylolpropanetrimethacrylate, ethoxyliertes Trimethylolpropantriacrylat, Pentaerythritoltriacrylate, Pentaerythritoltrimethacrylat oder Trimethylolpropantrimethacrylat; Divinylverbindungen, insbesondere Divinylester wie z. B. Divinylbenzol, Divinylsuccinat, Divinyladipat, Divinylmaleat, Divinyloxalat, Divinylmalonat oder Divinylglutarat.

Die Glasübergangstemperatur des Polymers vor Vernetzung der Keto- oder Aldehydgruppen des Polymers mit Verbindung A ist kleiner als 10 °C, vorzugsweise kleiner - 15 °C und vorzugsweise größer -40 °C, insbesondere von - 35 °C bis kleiner als - 15 °C. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

Bei der Polymerisation können Molekulargewichtsregler eingesetzt werden. Vorzugsweise werden keine Molekulargewichtsregler eingesetzt. Falls Molekulargewichtsregler eingesetzt werden, so erfolgt dies vorzugsweis in Mengen von mindestens 0,01 Gewichtsteilen Molekulargewichtsregler pro 100 Gewichtsteile Monomere, z.B. von 0,01 bis 5 Gew.-Teile, oder von 0,01 bis 3 Gewichtsteilen, vorzugsweise von 0,01 bis 0,75 Gewichtsteilen auf 100 Gew.-Teile der zu polymerisierenden Monomeren. Hierdurch kann durch eine Kettenabbruchsreaktion die Molmasse des Emulsionspolymerisats kontrolliert bzw. verringert werden. Die Regler werden dabei an das Polymer gebunden, im Allgemeinen an das Kettenende. Die Zugabe kann kontinuierlich oder in Stufen während der Polymerisation erfolgen.

Geeignete Regler sind z. B. organische Verbindungen die Schwefel in gebundener Form enthalten (z. B. Verbindungen mit einer Thiolgruppe), aliphatische und/oder araliphatische Halogenverbindungen, aliphatische und/oder aromatische Aldehyde, ungesättigte Fettsäuren (wie z. B. Ölsäure), Diene mit nicht konjugierten Doppelbindungen (wie z. B. Divinylmethan, Terpinolen oder Vinylcyclohexen), Kohlenwasserstoffe mit leicht abstrahierbaren Wasserstoffatomen (wie z. B. Toluol), organische Säuren bzw. deren Salze (wie z. B. Ameisensäure, Natriumformiat, Ammoniumformiat), Alkohole (wie z. B. Isopropanol) sowie Phosphorverbindungen (wie z. B. Natriumhypophosphit). Es ist aber auch möglich, Gemische sich nicht störender vorgenannter Regler einzusetzen. Bei den Reglern handelt es sich im Allgemeinen um niedermolekulare Verbindungen mit einem Molgewicht kleiner 2000, insbesondere kleiner 1000 g/mol. Günstig ist es, wenn eine Teil- oder die Gesamtmenge der Regler dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren während der Polymerisation zugeführt werden.

Organische Verbindungen mit einer Thiolgruppe sind z.B. primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkylcarbonsäureester z. B. von C2- bis C4-Carbonsäuren mit 1 bis 18 C-Atomen in der Alkylgruppe, z. B. 2-Mercaptoethyl-propionat, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen. Bevorzugte organische Verbindungen, die Schwefel in gebundener Form enthalten sind insbesondere tert.-Butylmercaptan, Thioglycolsäureethylester, Mercaptoethanol, Mercaptopropyltrimethoxysilan, tert.-Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Besonders bevorzugte Thioverbindungen sind tert.-Butylmercaptan, Thioglycolsäureethylester, Mercaptoethanol, Mercaptopropyltrimethoxysilan, 2-Ethylhexylthioglycolat (EHTG), Isooctyl-3-mercaptopropionat (IOMPA) oder tert.-Dodecylmercaptan (tDMK).

Aliphatische und/oder araliphatische Halogenverbindungen sind z.B. n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid. Aliphatische und/oder aromatische Aldehyde sind z. B. Formaldehyd, Acetaldeyhd, Propionaldehyd und/oder Benzaldehyd.

Die Haftklebstoffzusammensetzung enthält mindestens eine Verbindung A, welche mindestens zwei, insbesondere 2 bis 5 funktionelle Gruppen aufweist, die mit Ketogruppen oder mit Aldehydgruppen eine Vernetzungsreaktion eingehen können. Verbindungen, die mit den Keto- oder Aldehydgruppen eine Vernetzungsreaktion eingehen können sind z. B. Verbindungen mit Hydrazid-, Hydroxylamin-, Oximether- oder Aminogruppen. Geeignete Verbindungen mit Hydrazidgruppen sind z. B. Polycarbonsäurehydrazide mit einem Molgewicht von vorzugsweise bis zu 500 g/mol. Bevorzugte Hydrazidverbindungen sind Dicarbonsäuredihydrazide mit bevorzugt 2 bis 10 C-Atomen. Genannt seien z. B. Oxalsäuredihydrazid, Malonsäuredihydrazid, Bernsteinsäuredihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazinsäuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die "Jeffamine", Cyclohexandiamin und Xylylendiamin.

Vorzugsweise ist Verbindung A ein Dicarbonsäuredihydrazid mit 2 bis 10 C-Atomen, und Monomer (iv) ist ausgewählt aus Acetoacetyl(meth)acrylat, Acetoacetoxyethyl-(meth)acrylat und Diacetonacrylamid. Besonders bevorzugt ist Verbindung A Adipinsäuredihydrazid und Monomer (iv) Diacetonacrylamid.

Optional kann die Vernetzung der Keto- oder Aldehydgruppen des Klebstoffpolymers verzögert werden, z. B. durch Verwendung von Hydrazinen als Verbindung A und Zusatz von flüchtigen Carbonylverbindungen oder durch Verwendung von Hydrazonen als Verbindung A, gebildet aus Hydraziden und flüchtigen Carbonylverbindungen. Bevorzugte flüchtige Carbonylverbindungen haben einen Siedepunkt von kleiner 100 °C, insbesondere kleiner 70 °C. Bevorzugt sind Ketone, insbesondere Aceton und Methylethylketon. Bevorzugte Einsatzmengen der flüchtigen Carbonylverbindungen zur Verzögerung der Vernetzung sind kleiner oder gleich 1 Gew.-% (Summe aus freier und im Hydrazon gebundener Carbonylverbindung, bezogen auf die Gesamtzusammensetzung). Für Anwendungen, bei denen ein möglichst geringer Gehalt an flüchtigen organischen Verbindungen (VOC) wichtig ist, enthält die Haftklebstoffzusammensetzung vorzugsweise keine flüchtigen Carbonylverbindungen.

Das Molverhältnis der mit Ketogruppen oder mit Aldehydgruppen reaktiven Gruppen der Verbindung A zu den Keto- und Aldehydgruppen des Monomers (iv) beträgt vorzugsweise von 1:10 bis 2:1, insbesondere 1 : 5 bis 2 : 1, besonders bevorzugt 1 : 2 bis 2 : 1 und ganz besonders bevorzugt 1 : 1,3 bis 1,3 : 1. Insbesondere sind äquimolare Mengen der mit Ketogruppen oder mit Aldehydgruppen reaktiven Gruppen und der Keto- und/oder Aldehydgruppen bevorzugt.

Die Verbindung mit den funktionellen Gruppen kann der Zusammensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein.

Es wurde gefunden, dass die Klebeeigenschafften durch die Menge und Art des Gelgehaltes positiv beeinflusst werden können. Der gesamte Gelgehalt $Gel_{ges}$ setzt sich zusammen aus einem Gelgehalt $Gel_0$, der auf kovalenter, irreversibler, nicht durch Vernetzung der Keto- oder Aldehydgruppen des Polymers mit Verbindung A bewirkter Vernetzung beruht und einem Gelgehalt $Gel_K$, der auf einer Vernetzung der Keto- oder Aldehydgruppen des Polymers mit Verbindung A beruht, d.h. $Gel_{ges} = Gel_0 + Gel_K$.

Optional kann der Gesamtgelgehalt $Gel_{ges}$ zusätzlich noch einen Anteil an auf einer reversiblen Vernetzung durch Metallsalze beruhenden Gelgehalt $Gel_M$ enthalten. Für diesen Fall ist $Gel_{ges} = Gel_0 + Gel_K + Gel_M$

Der gesamte Gelgehalt $Gel_{ges}$ beträgt nach Filmbildung auf einem Substrat mindestens 80 Gew.-%, vorzugsweise mindestens 85 Gew.-%, bezogen auf einen aus dem Haftklebstoffpolymer hergestellten Polymerfilm.

Der Gelgehalt $Gel_K$, der auf einer Vernetzung der Keto- oder Aldehydgruppen des Polymers mit Verbindung A beruht und beträgt mindestens 30 Gew.-%, vorzugsweise mindestens 40 Gew.-% oder mindestens 45 Gew.-% oder besonders bevorzugt mindestens 50 Gew.-%, bezogen auf einen aus dem Haftklebstoffpolymer hergestellten Polymerfilm. $Gel_K$ kann z. B. durch die Menge der Keto- und Aldehydgruppen des Polymers und die Menge der Verbindung A eingestellt werden.

Der Gelgehalt $Gel_0$, der auf kovalenter, irreversibler, nicht durch Vernetzung der Keto-oder Aldehydgruppen des Polymers mit Verbindung A beruht, kann 0 bis kleiner oder gleich 50 Gew.-%, vorzugsweise maximal 40 Gew.-% oder maximal 30 Gew.-%, z. B. größer Null bis 40 Gew.-% oder 1 bis 30 Gew.-%, bezogen auf den Feststoffgehalt betragen. $Gel_0$ kann durch Verwendung von geringen Mengen an Molekulargewichtsreglern und/oder durch Variation der Menge an Styrol eingestellt werden. Vorzugsweise wird kein Molekulargewichtsregler verwendet.

Eine besonders bevorzugte Haftklebstoffzusammensetzung in Form einer wässrigen Polymerdispersion enthält mindestens ein Haftklebstoffpolymer, welches gebildet ist durch Emulsionspolymerisation aus

(i) mindestens 65 Gew.-% bezogen auf die Summe der Monomere, mindestens eines Acrylsäureestermonomers ausgewählt aus n-Butylacrylat und 2-Ethylhexylacrylat,

(ii) 0,5 bis 8 Gew.-%, bezogen auf die Summe der Monomere, mindestens eines Säuremonomers ausgewählt aus Acrylsäure, Methacrylsäure und Itaconsäure,

(iii) 5 bis 19 Gew.-%, bezogen auf die Summe der Monomere, Styrol,

(iv) 0,3 bis 5 Gew.-%, bezogen auf die Gesamtmenge an Monomeren, mindestens einer ethylenisch ungesättigten Verbindung mit mindestens einer Ketogruppe, ausgewählt aus der Gruppe bestehend aus Acetoacetyl(meth)acrylat, Acetoacetoxyethyl(meth)acrylat und Diacetonacrylamid

(v) 0 bis 10 Gew.-%, bezogen auf die Summe der Monomere, Monomere ausgewählt aus der Gruppe bestehend aus von den Monomeren (i) bis (iv) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen,

ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C-Atomen und ein oder zwei Doppelbindungen,

wobei das Haftklebstoffpolymer einen Gelgehalt $Gel_{ges}$ von mindestens 80 Gew.-%, bezogen auf den Polymerfilm, aufweist,
wobei der auf Vernetzung der Keto- oder Aldehydgruppen des Polymers mit Verbindung A beruhende Gelgehalt $Gel_K$ des Haftklebstoffpolymers mindestens 50 Gew.-% beträgt,
und der auf kovalenter, irreversibler, nicht auf Vernetzung der Keto- oder Aldehydgruppen des Polymers mit Verbindung A beruhende Gelgehalt $Gel_0$ des Haftklebstoffpolymers größer als 0 und bis zu 30 Gew.-% beträgt,
und wobei die Glasübergangstemperatur des Haftklebstoffpolymers kleiner als - 15°C ist.

Die erfindungsgemäß verwendeten Polymerdispersionen sind durch radikalische Emulsionspolymerisation von ethylenisch ungesättigten, radikalisch polymerisierbaren Verbindungen (Monomeren) erhältlich. Bei der Emulsionspolymerisation werden ethylenisch ungesättigte Verbindungen (Monomere) in Wasser polymerisiert, wobei ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: $C_8$- bis $C_{36}$), ethoxylierte Mono-, Di- und Trialkylphenole (EO-Grad: 3 bis 50, Alkylrest: $C_4$- bis Cg), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis Cg), von Alkylsulfonsäuren (Alkylrest: $C_{12}$- bis $C_{18}$) und von Alkylarylsulfonsäuren (Alkylrest: Cg- bis $C_{18}$).

Weitere geeignete Emulatoren sind Verbindungen der allgemeinen Formel

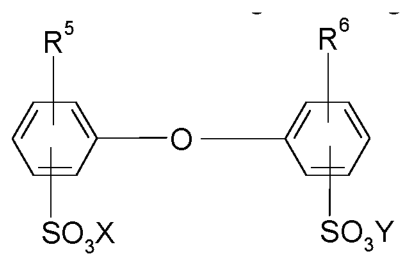

worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax®2 A1, Emulan® NP 50, Dextrol®OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Polymerisation kann auch in Gegenwart eines Schutzkolloids erfolgen. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung

zwischen Polymerpartikeln und Wasser nicht. Das zahlenmittlere Molekulargewicht von Schutzkolloide liegt z. B. oberhalb von 1000 g/mol.

Die Emulsionspolymerisation kann mit wasserlöslichen Initiatoren gestartet werden. Wasserlösliche Initiatoren sind z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei den Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130 °C, vorzugsweise bei 50 bis 95 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet.

Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Bei der Polymerisation kann auch z. B. zur besseren Einstellung der Teilchengröße eine Polymersaat vorgelegt werden. Die Polymerisation erfolgt bevorzugt saatkontrolliert, d. h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,01 bis 0,5 Gew.-Teilen, besonders bevorzugt von 0,03 bis 0,3 Gew.-Teilen, bezogen auf 100 Gewichtsteile Monomere. Geeignet ist z. B. ein Latex auf Basis von Polystyrol oder auf Basis von Polymethylmethacrylat. Ein bevorzugter Saatlatex ist Polystyrolsaat.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d. h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-%, oder 40 bis 60 Gew.-%, besonders bevorzugt größer oder gleich 50 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion schlecht handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung. Das so hergestellte Polymer wird vorzugsweise in Form seiner wässrigen Dispersion verwendet. Die Größenverteilung der Dispersionsteilchen kann monomodal, bimodal oder multimodal sein.

Die Neutralisation von Säuregruppen des Polymerisats erfolgt vorzugsweise durch Zulauf eines Neutralisationsmittels während oder nach der Polymerisation, wobei die Säuregruppen ganz oder teilweise durch Zulauf einer Base neutralisiert werden. Das Neutralisationsmittel kann z. B. in einem separaten Zulauf parallel zum Zulauf der Monomermischung zugegeben werden. Nach Zulauf sämtlicher Monomere ist vorzugsweise die zur Neutralisation von mindestens 10 %, vorzugsweise 10 bis 100 % oder 25 bis 90 % Säureäquivalenten benötigte Menge an Neutralisationsmittel in dem Polymerisationsgefäß enthalten. Ein besonders bevorzugtes Neutralisationsmittel ist Ammoniak. Der pH-Wert der Polymerdispersion wird vorzugsweise auf pH größer 4,5, insbesondere auf einen pH-Wert zwischen 5 und 8 eingestellt.

Die Haftklebstoffzusammensetzung enthält mindestens einen Tackifier (klebrigmachendes Harz). Die Menge an Tackifier beträgt vorzugsweise von 5 bis 40 Gewichtsteilen, bezogen auf 100 Gewichtsteile Klebstoffpolymer. Ein Tackifier ist ein polymerer oder oligomerer Zusatzstoff für Klebstoffpolymere oder allgemein für Elastomere, der deren Autoadhäsion (Tack, Eigenklebrigkeit, Selbsthaftung) erhöht, sodass sie nach kurzem leichten Andruck fest auf Oberflächen haften. Tackifier sind z. B. Naturharze, wie Kolophoniumharze und deren durch Disproportionierung oder Isomerisierung, Polymerisation, Dimerisation, Hydrierung entstehenden Derivate oder Terpenharze. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des Weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, alpha-Methylstyrol, Vinyltoluol Verwendung. Tackifier sind z.B. aus Adhesive Age, Juli 1987, Seite 19-23 oder Polym. Mater. Sci. Eng. 61 (1989), Seite 588-592 bekannt.

Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 50000, insbesondere unter 30 000. Die Polyacrylate bestehen bevorzugt zu mindestens 60 Gew.-%, insbesondere mindestens 80 Gew.-% aus $C_1$-$C_8$ Alkyl(meth)acrylaten. Geeignet sind z.B. die in der WO 2013/117428 beschriebenen niedrigmolekularen Polymerisate und Oligomere mit einem gewichtsmittleren Molekulargewicht von weniger als 50000 und einer Glasübergangstemperatur von größer oder gleich - 40 °C bis kleiner oder gleich 0 °C, vorzugsweise von größer oder gleich - 35°C, bis kleiner oder gleich 0 °C, herstellbar durch Emulsionspolymerisation in Gegenwart mindestens eines Molekulargewichtsreglers und herstellbar aus einem Monomergemisch enthaltend mindestens 40 Gew.% mindestens eines C1- bis C20-Alkyl(meth)acrylats.

Bevorzugte Tackifier sind natürliche oder chemisch modifizierte Kolophoniumharze. Kolophoniumharze bestehen zum überwiegenden Teil aus Abietinsäure oder Abietinsäurederivaten oder deren hydrierte Derivate. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Die Haftklebstoffzusammensetzung kann noch weitere Zusatzstoffe enthalten, z.B. Füllstoffe, Farbstoffe, Verlaufsmittel, Verdicker (vorzugsweise Assoziativverdicker), Entschäumer, Vernetzer, Weichmacher, Pigmente oder Netzmittel. Für eine bessere Benetzung von Oberflächen können die Haftklebstoffe insbesondere Benetzungshilfsmittel (Netzmittel), z. B. Fettalkoholethoxylate, Alkylphenolethoxylate, Nonylphenolethoxylate, Polyoxyethylene/-propylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Klebstoffpolymer (fest).

Vorzugsweise enthält die Haftklebstoffzusammensetzung

60 - 95 Gewichtsteile Haftklebstoffpolymer,
5 - 40 Gewichtsteile Tackifier und
optional 0 - 10 Gewichtsteile weitere Bestandteile wie z.B. die oben genannten Netzmittel, Verdicker, Entschäumer, etc.

Die Haftklebstoffzusammensetzung ist vorzugsweise ein Einkomponenten-Haftklebstoff. Einkomponentige Klebstoffe sind Klebstoffe, bei denen unmittelbar vor deren Anwendung kein externer Vernetzer (wie z. B. Isocyanatvernetzer) zugegeben wird.

Die Haftklebstoffzusammensetzung bildet nach Trocknung einen Film mit einer Klebrigkeit von größer oder gleich 10 N/25mm, gemessen als Loop Tack gegenüber einer Stahloberfläche (Klebstoff in einer Auftragsmenge von 60 g/$m^2$ aufgetragen auf einer 36 $\mu$m starken Polyethylenterephtalatfolie, gemessen gegenüber Stahl bei 23 °C und 50 % relativer Luftfeuchte mit einer Abzugsgeschwindigkeit von 300 mm/min, Details siehe Beispiele).

Die Haftklebstoffzusammensetzung bildet nach Trocknung einen Film mit einer Schälfestigkeit von vorzugsweise größer als 5 N/25 mm gegenüber einer Polyethylenoberfläche (gemessen mit einer Auftragsstärke von 60 g/$m^2$ aufgetragen auf einer 36 $\mu$m starken Polyethylenterephtalatfolie, gemessen gegenüber Polyethylen bei 23 °C und 50 % relativer Luftfeuchte mit einer Abzugsgeschwindigkeit von 300 mm/min, Details siehe Beispiele).

Die Haftklebstoffzusammensetzung kann zur Herstellung von selbstklebenden Artikeln verwendet werden. Die

Artikel sind zumindest teilweise mit dem Haftklebstoff beschichtet. Die Klebeeigenschaften können so eingestellt werden, dass die selbstklebenden Artikel nach der Verklebung wiederabziehbar sind. Bei den selbstklebenden Artikeln kann es sich z. B. um Klebeetiketten, Klebebänder oder Klebefolien handeln. Geeignete Trägermaterialien sind z. B. Papier, Kunststofffolien und Metallfolien. Bei erfindungsgemäßen selbstklebenden Bändern kann es sich um einseitig oder beidseitig beschichtete Bänder aus den obigen Substanzen handeln. Bei erfindungsgemäßen selbstklebenden Etiketten kann es sich um Etiketten aus Papier oder einer thermoplastischen Folie handeln. Besonders bevorzugt sind Klebebänder aus thermoplastischer Folie. Als thermoplastische Folie kommen z.B. Folien aus Polyolefinen (z .B. Polyethylen, Polypropylen), Polyolefincopolymeren, Folien aus Polyestern (z. B. Polyethylenterephtalat), Polyvinylchlorid oder Polyacetat in Betracht. Die Oberflächen der thermoplastischen Polymerfolien sind vorzugweise coronabehandelt. Geschäumte Träger kommen auch in Betracht. Die Etiketten sind einseitig mit Klebstoff beschichtet. Bevorzugte Substrate für die selbstklebenden Artikel sind Papier und Polymerfolien.

Die selbstklebenden Artikel sind auf mindestens einer Oberfläche zumindest teilweise mit einem erfindungsgemäßen Haftklebstoff beschichtet. Der Klebstoff kann nach üblichen Methoden wie Rollen, Rakeln oder Streichen auf die Artikel aufgetragen werden. Die Auftragsmenge beträgt bevorzugt 0,1 bis 300 g, besonders bevorzugt 2 bis 150 g Feststoff pro $m^2$. Nach dem Auftragen folgt im Allgemeinen ein Trocknungsschritt zur Entfernung des Wassers bzw. der Lösungsmittel. Das Wasser kann durch Trocknung bei z. B. 50 bis 150 °C entfernt werden. Die so erhaltenen, beschichteten Substrate werden z. B. als Selbstklebeartikel, wie Klebeetiketten, Klebebänder oder Klebefolien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Bei den Substraten, auf welche die selbstklebenden Artikel vorteilhaft aufgebracht werden können, kann es sich z. B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Dampfsperren, Kraftfahrzeugkarosserien, Reifen oder Karosserieteilen.

Die Erfindung betrifft auch die Verwendung der oben beschriebenen Haftklebstoffzusammensetzung zur Herstellung von Klebeetiketten, Klebebändern oder Klebefolien.

Die Erfindung betrifft auch selbstklebende Artikel, beschichtet mit einer oben beschriebenen Haftklebstoffzusammensetzung.

Die Erfindung betrifft auch ein Verfahren zur Herstellung eines selbstklebenden Artikels indem ein Substrat beschichtet wird mit einer oben beschriebenen Haftklebstoffzusammensetzung.

Beispiele

Es werden folgende Einsatzstoffe und Abkürzungen verwendet:

| | |
|---|---|
| EHA: | 2-Ethylhexylacrylat |
| BA: | n-Butylacrylat |
| MA | Methylacrylat |
| S: | Styrol |
| MAS | Methacrylsäure |
| AS | Acrylsäure |
| DAAM | Diacetonacrylamid |
| ADDH | Adipinsäuredihydrazid |
| BDA-2 | Butandioldiacrylat (Vernetzer für kovalente, irreversible Vernetzung) |
| tDMK | tert.-Dodecylmercaptan |
| pphm | Gewichtsteile pro Hundert Gewichtsteile Monomere (parts per hundred monomer) |
| NKL | Normklima, 50 % rel. Luftfeuchtigkeit, 1 bar, 23 °C |

Die mit V... bezeichneten Beispiele sind Vergleichsbeispiele, die mit E... bezeichneten Beispiele sind erfindungsgemäße Beispiele.

Anwendungstechnische Prüfungen

Bestimmung des Gelgehalts

Aus der zu untersuchenden Polymerdispersion werden Polymerfilme hergestellt. Die Polymerfilme werden 1 Tag bei Raumtemperatur (20 °C) und anschließend 4 Tage bei 50°C getrocknet. Der getrocknete Film wird mit der 99fachen Masse an Methylethylketon versetzt. Der eingelegte Film wird für 4 Tage bei Raumtemperatur gelagert. Dann

wird der gequollene oder gelöste Film über tariertem 125 μm Perlonfilter abfiltriert. Der Filter wird bei Raumtemperatur getrocknet, bis er frei von Lösungsmittel ist. Dann wird nochmals für 1 Stunde bei 50 °C nachgetrocknet und der Gelanteil (im Filter verbleibender, in Methylethylketon unlöslicher Feststoffanteil) durch Auswiegen bestimmt.

Der gesamte Gelgehalt $Gel_{ges}$ eines Klebstoffpolymers ist der Gelgehalt nach Filmbildung auf einem Substrat und umfasst sowohl die während der Polymerisation gebildeten Gelgehalt als auch den durch Vernetzung der Ketogruppen des Polymers mit Verbindung A gebildeten Gelgehalt. Zur Bestimmung des gesamten Gelgehaltes wird der Polymerdispersion vor der Filmbildung Verbindung A (Adipinsäuredihydrazid) zugegeben.

Der Gelgehalt $Gel_0$, der auf kovalenter, irreversibler, nicht durch Vernetzung der Keto-oder Aldehydgruppen des Polymers mit Verbindung A bewirkter Vernetzung beruht, wird bestimmt unter Verwendung von Polymerdispersionen, die keine Verbindung A (kein Adipinsäuredihydrazid) enthalten.

Der auf Vernetzung der Ketogruppen mit Verbindung A beruhende Gelgehalt $Gel_K$ ist die Differenz der beiden vorstehend genannten Gelgehaltmessungen:

$$Gel_K = Gel_{ges} - Gel_0.$$

Prüfung der Klebeeigenschaften

Zur Prüfung der Klebeeigenschaften werden die Haftklebstoffe mit einer Auftragsmenge von ca. 60 g/$m^2$ auf Hostaphan® RN 36 (biaxial orientierte Folie aus Polyethylenterephtalat, 36 μm Dicke) als Träger beschichtet und 5 Minuten bei 90 °C getrocknet.

Mit ADDH vernetzte Dispersionsfilme werden 5 Tage bei Normklima (23 °C, 50 % relative Luftfeuchtigkeit) gelagert, nicht mit ADDH versetzte Dispersionsfilme werden 24h bei Normklima gelagert und dann die Klebeeigenschaften bei Normklima bestimmt, sofern nichts anderes angegeben ist.

Quickstick (Loop Tack, entsprechend FINAT Testmethode FTM9)

Bei der Bestimmung des Quickstick (Oberflächenklebrigkeit, auch Loop Tack genannt) wird im Allgemeinen die Kraft bestimmt, die ein auf ein Trägermaterial aufgebrachter Klebstoff durch Verklebung ohne Druck auf ein Substrat bei einer definierten Abzugsgeschwindigkeit dem Abziehen vom Substrat entgegensetzt, gemessen bei 23 °C, 50 % relativer Luftfeuchte. Prüfsubstrate sind Stahl oder Polyethylen. Aus dem mit Klebstoff beschichteten Träger wird ein Prüfstreifen in 25 mm Breite und 250 mm Länge geschnitten und mindestens 16 Stunden bei Normklima (23 °C, 50 % rel. Luftfeuchte) gelagert. Die beiden Enden des Prüfstreifens werden auf ca. 1 cm Länge mit der Klebeseite nach innen umgeklappt. Aus dem Klebstreifen wird eine Schlaufe mit der Klebseite nach außen gebildet, die beiden Enden zusammengefasst und in die obere Klemme einer Zugprüfmaschine eingespannt. In die untere Klemme wird die Prüfsubstrathalterung eingespannt. Die Klebestreifenschlaufe wird durch die Zugprüfmaschine mit einer Geschwindigkeit von 300 mm/Minute nach unten gefahren, sodass die Klebseite des Prüfstreifens mit dem Substrat ohne zusätzlichen Druck verklebt. Die Zugprüfmaschine wird gestoppt und sofort wieder nach oben gefahren, wenn sich die Unterkante der oberen Klemme 40 mm über dem Substrat befindet. Die Angabe des Prüfergebnisses erfolgt in N/25 mm Breite. Es wird der höchste Wert der Anzeige (Fmax) als Maß der Oberflächenklebrigkeit abgelesen. Aus drei Einzelergebnissen wird ein Mittelwert gebildet.

Schälfestigkeit (entsprechend FINAT Testmethode FTM1)

Die Schälfestigkeit ist ein Maß für die Adhäsion, gemessen bei 23°C, 50% relativer Luftfeuchte. Bei der Bestimmung der Schälfestigkeit wird jeweils ein 25 mm breiter Prüfstreifen auf einen Prüfkörper aus Polyethylen oder Stahl geklebt und mit einer 1 kg schweren Rolle 1mal angerollt. Er wird dann mit einem Ende in die oberen Backen einer Zug-Dehnungs-Prüfapparatur eingespannt. Der Klebestreifen wird mit 300 mm/min unter einem 180°-Winkel von der Prüffläche abgezogen d.h. der Klebestreifen wird umgebogen und parallel zum Prüfkörper abgezogen und der dazu benötigte Kraftaufwand gemessen. Das Maß für die Schälfestigkeit ist die Kraft in N/25 mm, die sich als Durchschnittswert aus fünf Messungen ergibt. Die Schälfestigkeit wird 24 Stunden nach der Verklebung bestimmt. Nach dieser Zeit hat sich die Klebekraft voll ausgebildet.

Scherfestigkeit (entsprechend FINAT Testmethode FTM8)

Die Scherfestigkeit ist ein Maß für die Kohäsion, gemessen bei 23 °C, 50 % relativer Luftfeuchte. Der mit Haftklebstoff beschichtete Träger wird in 25 mm bzw. 12,5 mm breite Prüfstreifen geschnitten. Zur Bestimmung der Scherfestigkeit werden die Prüfstreifen mit einer verklebten Fläche von 25x25 mm (Messungen bei 70 °C) oder 12,5 x

12,5 mm (Messungen bei Normklima) auf Stahl geklebt und mit einer 1 kg schweren Rolle einmal angerollt, 10 min gelagert (im Normklima, 50 % rel. Luftfeuchtigkeit, 1 bar, 23 °C) und anschließend hängend mit einem 1 kg Gewicht (im Normklima NKL, 12,5 x 12,5 mm) oder mit einem 2 kg Gewicht (bei 70 °C, 25 x 25 mm) belastet. Das Maß für die Scherfestigkeit ist die Zeit in Minuten bis zum Abfallen des Gewichts; es wird jeweils der Durchschnitt aus 5 Messungen berechnet.

S.A.F.T.-Test (Wärmestandfestigkeit)

Die Prüfstreifen werden mit einer verklebten Fläche von 25 x 25 mm auf AFERA-Stahl geklebt, mit einer 2 kg schweren Rolle 4mal angerollt und nach mindestens 16 Stunden Kontaktzeit hängend mit einem 1 kg Gewicht belastet. Während der Belastung wird ausgehend von 23 °C kontinuierlich mit einer Rate von 0,5 °C/min aufgeheizt. Die beim Abfallen des Gewichtes erreichte Aufheiztemperatur ist ein Maß für die Wärmestandfestigkeit des Klebstoffs. Es wird jeweils der Durchschnitt aus 3 Messungen berechnet.

Beispiele E1-E15 und V1-V8

Es werden Emulsionspolymerisate eingesetzt, hergestellt aus den in Tabelle 1 genannten Monomeren und im Gewichtsverhältnis 75:25 (fest:fest Polymer zu Tackifier) mit Tackifier Snowtack® 933 E (Rosinester Dispersion) versetzt. Die Mengenangaben sind Gewichtsteile. Die mit V... bezeichneten Beispiele sind Vergleichsbeispiele, die mit E... bezeichneten Beispiele sind erfindungsgemäße Beispiele.

Tabelle 1: Emulsionspolymerisate

| Beispiel | Tg 2) [°C] | BA | EHA | S | MAS | DAAM | ADDH | $Gel_0$ [%] | $Gel_{ges}$ [%] | $Gel_K$ [%] |
|---|---|---|---|---|---|---|---|---|---|---|
| V1 | -28 | 85 | | 10 | 5 | - | - | 29 | 29 | 0 |
| V2 | -28 | 85 | | 10 | 4,75 | 0,25 | 0,062 5 | 17 | 60 | 43 |
| V3 | -28 | 85 | | 10 | 4,75 | 0,25 | 0,075 | 17 | 70 | 53 |
| V4 | -28 | 85 | | 10 | 4,75 | 0,25 | 0,125 | 17 | 79 | 62 |
| E1 | -28 | 85 | | 10 | 4,5 | 0,5 | 0,25 | 19 | 87 | 68 |
| E2 | -28 | 85 | | 10 | 4,5 | 0,5 | 0,20 | 19 | 85 | 66 |
| E3 | -28 | 85 | | 10 | 4,5 | 0,5 | 0,15 | 19 | 80 | 61 |
| E4 | -28 | 85 | | 10 | 4,25 | 0,75 | 0,375 | 22 | 92 | 70 |
| E5 | -33 | 90 | | 5 | 4,5 | 0,5 | 0,15 | 29 | 81 | 52 |
| E6 | -33 | 90 | | 5 | 4,5 | 0,5 | 0,25 | 29 | 87 | 58 |
| E7 | -30 | 75 | 10 | 10 | 4,5 | 0,5 | 0,25 | 23 | 87 | 64 |
| E8 | -32 | 65 | 20 | 10 | 4,5 | 0,5 | 0,25 | 24 | 88 | 62 |
| V5 | -21 | 55 | 20 | 20 | 4,5 | 0,5 | 0,25 | 18 | 90 | 72 |
| E9 | -33 | 55 | 30 | 10 | 4,5 | 0,5 | 0,25 | 29 | 89 | 60 |
| E10 | -29 | 85 | | 10 | 4 | 1 | 0,25 | 23 | 94 | 71 |
| E11 | -31 | 87,5 | | 10 | 2 | 0,5 | 0,25 | 25 | 88 | 63 |
| E12 | -36 | 57,5 | 30 | 10 | 2 | 0,5 | 0,25 | 24 | 83 | 59 |
| E13 | -32 | 88,5 | | 10 | 1 | 0,5 | 0,25 | 11 | 89 | 78 |
| V6 1) | -28 | 85 | | 10 | 5 | 1 | 0,175 | 0 | 67 | 67 |
| V7 1) | -28 | 85 | | 10 | 5 | 1 | 0,15 | 0 | 56 | 56 |
| E14 1) | -28 | 85 | | 10 | 5 | 1 | 0,25 | 0 | 82 | 82 |
| E15 1) | -28 | 85 | | 10 | 5 | 1 | 0,375 | 0 | 89 | 89 |

(fortgesetzt)

| Beispiel | Tg [2] [°C] | BA | EHA | S | MAS | DAAM | ADDH | $Gel_0$ [%] | $Gel_{ges}$ [%] | $Gel_K$ [%] |
|---|---|---|---|---|---|---|---|---|---|---|
| V8 [3] | | 69 | 30 | | 1 AS | 0,4 | 0,2 | 69 | 82 | 13 |

[1] Polymerisation in Gegenwart von 0,1 pphm Molekulargewichtsregler tDMK
[2] berechnet für Mischung aus BA, EHA, S, MAS (d.h. ohne DAAM, ADDH)
[3] Vergleichsversuch gemäß Beispiel Polymer 1 von WO 06/066761

Es wurden Klebefolien hergestellt und die Klebewerte gemessen (Quickstick, Schälfestigkeit, Scherfestigkeit, Wärmestandfestigkeit S.A.F.T.-Test). Die Ergebnisse sind in Tabelle 2 dargestellt.

Tabelle 2: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | PE | NKL | 70°C | |
| V1 | 13,3 | 10,6 | 13,3 | 7,3 | 9,9 | 0,3 | 109 |
| V2 | 13,4 | 11,0 | 14,5 | 6,8 | 1,6 | 0,1 | 74 |
| V3 | 13,0 | 11,4 | 14,4 | 6,6 | 1,7 | 0,08 | 75 |
| V4 | 13,0 | 10,4 | 14,7 | 7,0 | 4,4 | 0,2 | 88 |
| E1 | 12,4 | 9,6 | 14,7 | 9,2 | 70,1 | > 100 | 165 |
| E2 | 14,0 | 9,6 | 14,6 | 9,6 | 67,3 | > 100 | 161 |
| E3 | 13,4 | 9,8 | 14,5 | 9,5 | 50,2 | 21,1 | 143 |
| E4 | 13,6 | 8,7 | 13,8 | 5,5 | > 100 | > 100 | 180 |
| E5 | 13,5 | 9,2 | 13,5 | 7,4 | 28,7 | 11,8 | 146 |
| E6 | 12,4 | 8,6 | 13,7 | 5,2 | 33,3 | > 100 | 165 |
| E7 | 13,8 | 9,4 | 14,8 | 6,3 | > 100 | > 100 | 159 |
| E8 | 14,0 | 8,5 | 14,2 | 6,1 | > 100 | > 100 | 164 |
| V5 | 1,4 | 1,0 | 19,6 | 8,2 | 15,5 | > 100 | 160 |
| E9 | 11,3 | 8,1 | 13,6 | 6,1 | 25,2 | > 100 | 161 |
| E10 | 12,2 | 8,5 | 12,8 | 5,6 | > 100 | > 100 | > 180 |
| E11 | 12,8 | 10,0 | 13,4 | 6,0 | 10,2 | 35,0 | 135 |
| E12 | 12,0 | 8,9 | 13,6 | 6,2 | 8,0 | 26,0 | 121 |
| E13 | 12,1 | 9,0 | 11,6 | 5,2 | 3,3 | 3,8 | 153 |
| V6 | 13,0 | 10,6 | 15,8 | 6,7 | 1,8 | 0,1 | 83 |
| V7 | 10,8 | 10,1 | 16,4 | 7,3 | 0,9 | 0,08 | 68 |
| E14 | 12,2 | 10,0 | 15,5 | 7,5 | 33,9 | 13,3 | 135 |
| E15 | 11,5 | 9,9 | 14,9 | 6,5 | 40,6 | > 100 | 163 |
| V8 | 5,7 | 4,6 | 6,0 | 2,3 | 0,1 | 0,2 | > 180 |

Die Beispiele zeigen bei Verwendung von Carbonyl/Hydrazid-Vernetzung eine starke Erhöhung der Kohäsion und Wärmestandfestigkeit bei keinem oder nur geringem Abfall der Adhäsion.

Beispiele V9 bis V11 mit BDDA-Vernetzung und hohem $Gel_0$ (Vergleich)

Es werden Emulsionspolymerisate eingesetzt, hergestellt aus den in Tabelle 3 genannten Monomeren und im Gewichtsverhältnis 75:25 (fest:fest Polymer zu Tackifier) mit Tackifier Snowtack® 933 E (Rosinester Dispersion) versetzt.

Die Mengenangaben sind Gewichtsteile. Tg: ca. -30 °C

Tabelle 3: Emulsionspolymerisate mit BDDA-Vernetzung

| Beispiel | BA | EHA | S | MAS | MA | BDA-2 | $Gel_0$ [%] | $Gel_{ges}$ [%] | $Gel_K$ [%] |
|---|---|---|---|---|---|---|---|---|---|
| V9 | 15 | 59 | 20 | 1 | 5 | 0,07 | 56 | 56 | 0 |
| V10 | 15 | 59 | 20 | 1 | 5 | 0,1 | 69 | 69 | 0 |
| V11 | 15 | 59 | 20 | 1 | 5 | 0,25 | 86 | 89 | 0 |

Es wurden Klebefolien hergestellt und die Klebewerte gemessen (Quickstick, Schälfestigkeit, Scherfestigkeit, Wärmestandfestigkeit S.A.F.T.-Test). Die Ergebnisse sind in Tabelle 4 dargestellt.

Tabelle 4: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | PE | NKL | 70°C | |
| V9 | 14,9 | 12,6 | 15,6 | 7,3 | 0,9 | 0,07 | 68 |
| V10 | 15,5 | 12,8 | 14,2 | 7,1 | 0,8 | 0,1 | 71 |
| V11 | 11,3 | 9,2 | 10,6 | 5,3 | 0,8 | 0,1 | 93 |

Die Beispiele zeigen, dass die erst während der Filmbildung über Carbonylgruppen und Dihydrazide vernetzenden Klebstoffe mit hohem $Gel_K$ (Tabellen 1 und 2) im Vergleich zu über Monomere mit mindestens zwei nichtkonjugierten polymerisierbaren Vinylgruppen (Butandioldiacrylat, Tabellen 3 und 4) bereits während der Polymerisation vernetzten Klebstoffe mit hohem $Gel_0$ auch bei vergleichbarem Gesamtgelgehalt $Gel_{ges}$ (Beispiel V11: 89 %), d.h. bei vergleichbarem Gesamtvernetzungsgrad, bessere Kohäsionswerte (Scherfestigkeit) sowie bessere Wärmestandfestigkeiten (SAFT) zeigen.

## Patentansprüche

1. Haftklebstoffzusammensetzung in Form einer wässrigen Polymerdispersion enthaltend

   (a) mindestens einen Tackifier,
   (b) mindestens eine Verbindung A, welche mindestens zwei funktionelle Gruppen aufweist, die mit Ketogruppen oder mit Aldehydgruppen eine Vernetzungsreaktion eingehen können;
   (c) mindestens ein Haftklebstoffpolymer, welches gebildet ist durch Emulsionspolymerisation aus

      (i) mindestens 60 Gew.-% bezogen auf die Summe der Monomere, mindestens eines weichen (Meth)acrylsäureestermonomers, welches, wenn es als Homopolymer polymerisiert ist, eine Glasübergangstemperatur von weniger als 0°C aufweist,
      (ii) 0,1 bis 10 Gew.-%, bezogen auf die Summe der Monomere, mindestens eines Monomeren mit mindestens einer Säuregruppe,
      (iii) mindestens 5 und weniger als 20 Gew.-%, bezogen auf die Summe der Monomere, Styrol,
      (iv) 0,3 bis 5 Gew.-%, bevorzugt 0,4 bis 3 Gew.-%, bezogen auf die Gesamtmenge an Monomeren, mindestens einer ethylenisch ungesättigten Verbindung K mit mindestens einer funktionellen Gruppe, ausgewählt aus Ketogruppen und Aldehydgruppen;
      (v) optional weitere, von (i) bis (iv) verschiedene Monomere, ausgenommen Monomere mit mindestens zwei nichtkonjugierten polymerisierbaren Vinylgruppen,
      wobei die Polymerisation in Gegenwart von 0 bis 1 Gewichtsteilen Molekulargewichtsregler pro 100 Gewichtsteile Monomere erfolgt,
      wobei das Haftklebstoffpolymer nach Filmbildung auf einem Substrat einen Gelgehalt $Gel_{ges}$ von mindestens 80 Gew.-%, bezogen auf einen aus dem Haftklebstoffpolymer hergestellten Polymerfilm, aufweist, wobei der Gelgehalt zumindest teilweise auf einer Vernetzung der Keto- oder Aldehydgruppen des Polymers mit Verbindung A beruht und der auf Vernetzung der Keto- oder Aldehydgruppen des Polymers mit Verbindung A beruhende Gelgehalt $Gel_K$ des Haftklebstoffpolymers mindestens 30 Gew.-% beträgt, wobei der

Gelgehalt teilweise auch auf kovalenter, irreversibler, nicht durch Vernetzung der Keto- oder Aldehydgruppen des Polymers mit Verbindung A bewirkter Vernetzung beruhen kann und der auf kovalenter, irreversibler, nicht durch Vernetzung der Keto- oder Aldehydgruppen des Polymers mit Verbindung A bewirkte Gelgehalt $Gel_0$ des Haftklebstoffpolymers von 0 bis kleiner oder gleich 50 Gew.-% beträgt, und
wobei die Glasübergangstemperatur des Polymers vor Vernetzung der Keto-oder Aldehydgruppen des Polymers mit Verbindung A kleiner als 10 °C, vorzugsweise kleiner - 15 °C und größer - 40 °C ist, wobei Gelgehalt und Glasübergangstemperatur nach den in der Beschreibung offenbarten Verfahren bestimmt werden; und
wobei die Haftklebstoffzusammensetzung nach Trocknung einen Film bildet mit einer Klebrigkeit von größer oder gleich 10 N/25mm, gemessen als Loop Tack gegenüber einer Stahloberfläche bei 2 3°C, 50 % relativer Luftfeuchte und mit einer Abzugsgeschwindigkeit von 300 mm/min.

2. Haftklebstoffzusammensetzung gemäß Anspruch 1, **dadurch gekennzeichnet, dass** die Haftklebstoffzusammensetzung nach Trocknung einen Film bildet mit einer Schälfestigkeit größer 5 N/25 mm gegenüber einer Polyethylenoberfläche, gemessen bei 23 °C, 50 % relativer Luftfeuchte und mit einer Abzugsgeschwindigkeit von 300 mm/min.

3. Haftklebstoffzusammensetzung gemäß einem der vorhergehenden Ansprüche, **dadurch gekennzeichnet, dass** das Haftklebstoffpolymer gebildet ist aus 65 bis 94 Gew.-%, bezogen auf die Summe der Monomere, mindestens eines weichen (Meth)acrylsäureestermonomers ausgewählt aus n-Butylacrylat, 2-Ethylhexylacrylat, n-Hexylacrylat, Octylacrylat, Heptylacrylat und Ethylacrylat.

4. Haftklebstoffzusammensetzung gemäß einem der vorhergehenden Ansprüche, **dadurch gekennzeichnet, dass** das Haftklebstoffpolymer gebildet ist aus 0,5 bis 6 Gew.-%, bezogen auf die Summe der Monomere, an Monomeren (ii) und dass die Monomere (ii) ausgewählt sind aus Acrylsäure, Methacrylsäure, Itaconsäure und deren Gemisch.

5. Haftklebstoffzusammensetzung gemäß einem der vorhergehenden Ansprüche, **dadurch gekennzeichnet, dass** das Haftklebstoffpolymer gebildet ist aus 6 bis 18 Gew.-%, bezogen auf die Summe der Monomere, Styrol.

6. Haftklebstoffzusammensetzung gemäß einem der vorhergehenden Ansprüche, **dadurch gekennzeichnet, dass** die Monomere (iv) ausgewählt sind aus der Gruppe bestehend aus Acrolein, Methacrolein, Vinylalkylketonen mit 1 bis 20 C-Atomen im Alkylrest, Formylstyrol, (Meth)acrylsäurealkylester mit ein oder zwei Keto- oder Aldehydgruppen oder mit einer Aldehyd- und einer Ketogruppe im Alkylrest, N-Oxoalkyl(meth)acrylamide, Acetoacetyl(meth)acrylat, Acetoacetoxyethyl(meth)acrylat und Diacetonacrylamid.

7. Haftklebstoffzusammensetzung gemäß einem der vorhergehenden Ansprüche, **dadurch gekennzeichnet, dass** die Verbindung A ausgewählt ist aus der Gruppe bestehend aus Verbindungen mit Hydrazid-, Hydroxylamin-, Oximether- oder Aminogruppen.

8. Haftklebstoffzusammensetzung gemäß einem der vorhergehenden Ansprüche, **dadurch gekennzeichnet, dass** Verbindung A ein Dicarbonsäuredihydrazid mit 2 bis 10 C-Atomen ist, und dass Monomer (iv) ausgewählt ist aus Acetoacetyl-(meth)acrylat, Acetoacetoxyethyl(meth)acrylat und Diacetonacrylamid.

9. Haftklebstoffzusammensetzung gemäß einem der vorhergehenden Ansprüche, **dadurch gekennzeichnet, dass** Verbindung A Adipinsäuredihydrazid ist und dass Monomer (iv) Diacetonacrylamid ist.

10. Haftklebstoffzusammensetzung gemäß einem der vorhergehenden Ansprüche, **dadurch gekennzeichnet, dass** das Molverhältnis der mit Ketogruppen oder mit Aldehydgruppen reaktiven Gruppen der Verbindung A zu den Keto- und Aldehydgruppen der Verbindung K von 1:10 bis 2:1, vorzugsweise von 1:1,3 bis 1,3:1 beträgt.

11. Haftklebstoffzusammensetzung gemäß einem der vorhergehenden Ansprüche, **dadurch gekennzeichnet, dass** die optionalen Monomere (v) in Mengen von 0 bis 10 Gew.%, bezogen auf die Summe der Monomere, eingesetzt werden und ausgewählt sind aus der Gruppe bestehend aus von den Monomeren (i) bis (iv) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und (Meth)acrylamiden.

12. Haftklebstoffzusammensetzung gemäß einem der vorhergehenden Ansprüche, **dadurch gekennzeichnet, dass**

die Polymerisation in Gegenwart von 0,01 bis 0,75 Gewichtsteilen Molekulargewichtsregler pro 100 Gewichtsteile Monomere erfolgt.

**13.** Haftklebstoffzusammensetzung gemäß einem der vorhergehenden Ansprüche, **dadurch gekennzeichnet, dass** der auf Vernetzung der Keto- oder Aldehydgruppen des Polymers mit Verbindung A beruhende Gelgehalt $Gel_K$ des Haftklebstoffpolymers mindestens 50 Gew.-% beträgt, und der auf kovalenter, irreversibler, nicht auf Vernetzung der Keto- oder Aldehydgruppen des Polymers mit Verbindung A beruhende Gelgehalt $Gel_0$ des Haftklebstoffpolymers größer als 0 und bis zu 30 Gew.% beträgt.

**14.** Haftklebstoffzusammensetzung gemäß einem der vorhergehenden Ansprüche, **dadurch gekennzeichnet, dass** die Haftklebstoffzusammensetzung mindestens einen Tackifier enthält in einer Menge von 5 bis 40 Gewichtsteilen, bezogen auf 100 Gewichtsteile Polymer, wobei der Tackifier vorzugsweise ausgewählt ist aus natürlichen und chemisch modifizierten Kolophoniumharzen, bestehend zum überwiegenden Teil aus Abietinsäure, Abietinsäurederivaten oder deren hydrierten Derivaten.

**15.** Haftklebstoffzusammensetzung gemäß einem der vorhergehenden Ansprüche, **dadurch gekennzeichnet, dass** das Haftklebstoffpolymer gebildet ist aus

(i) mindestens 65 Gew.-% bezogen auf die Summe der Monomere, mindestens eines Acrylsäureestermonomers ausgewählt aus n-Butylacrylat und 2-Ethylhexylacrylat,
(ii) 0,5 bis 8 Gew.-%, bezogen auf die Summe der Monomere, mindestens eines Säuremonomers ausgewählt aus Acrylsäure, Methacrylsäure und Itaconsäure,
(iii) 5 bis 19 Gew.-%, bezogen auf die Summe der Monomere, Styrol,
(iv) 0,3 bis 5 Gew.-%, bezogen auf die Gesamtmenge an Monomeren, mindestens einer ethylenisch ungesättigten Verbindung mit mindestens einer Ketogruppe, ausgewählt aus der Gruppe bestehend aus Acetoacetyl(meth)acrylat, Acetoacetoxyethyl(meth)acrylat und Diacetonacrylamid,
(v) 0 bis 10 Gew.%, bezogen auf die Summe der Monomere, Monomere ausgewählt aus der Gruppe bestehend aus von den Monomeren (i) bis (iv) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen,
wobei das Haftklebstoffpolymer einen Gelgehalt $Gel_{ges}$ von mindestens 80 Gew.-%, bezogen auf den Polymerfilm, aufweist,
wobei der auf Vernetzung der Keto- oder Aldehydgruppen des Polymers mit Verbindung A beruhende Gelgehalt $Gel_K$ des Haftklebstoffpolymers mindestens 50 Gew.-% beträgt,
und der auf kovalenter, irreversibler, nicht auf Vernetzung der Keto- oder Aldehydgruppen des Polymers mit Verbindung A beruhende Gelgehalt $Gel_0$ des Haftklebstoffpolymers größer als 0 und bis zu 30 Gew.-% beträgt,
und wobei die Glasübergangstemperatur des Haftklebstoffpolymers kleiner als - 15 °C ist, wobei Gelgehalt und Glasübergangstemperatur nach den in der Beschreibung offenbarten Verfahren bestimmt werden.

**16.** Verwendung einer Haftklebstoffzusammensetzung gemäß einem der vorhergehenden Ansprüche zur Herstellung von Klebeetiketten, Klebebändern oder Klebefolien.

**17.** Selbstklebender Artikel, beschichtet mit einer Haftklebstoffzusammensetzung gemäß einem der Ansprüche 1 bis 15.

**18.** Verfahren zur Herstellung eines selbstklebenden Artikels indem ein Substrat beschichtet wird mit einer Haftklebstoffzusammensetzung gemäß einem der Ansprüche 1 bis 15.

## Claims

**1.** Pressure-sensitive adhesive composition in the form of an aqueous polymer dispersion comprising

(a) at least one tackifier,
(b) at least one compound A comprising at least two functional groups capable of undergoing a crosslinking reaction with keto groups or with aldehyde groups;
(c) at least one pressure-sensitive adhesive polymer formed by emulsion polymerization from

(i) at least 60% by weight, based on the sum of the monomers, of at least one soft (meth)acrylic ester monomer having, when polymerized as a homopolymer, a glass transition temperature of less than 0°C,
(ii) 0.1% to 10% by weight, based on the sum of the monomers, of at least one monomer having at least one acid group,
(iii) at least 5% and less than 20% by weight, based on the sum of the monomers, of styrene,
(iv) 0.3% to 5% by weight, preferably 0.4% to 3% by weight, based on the total amount of monomers, of at least one ethylenically unsaturated compound K having at least one functional group selected from keto groups and aldehyde groups;
(v) optionally further monomers distinct from (i) to (iv),

with the exception of monomers having at least two non-conjugated polymerizable vinyl groups,
wherein the polymerization is carried out in the presence of 0 to 1 parts by weight of chain transfer agent per 100 parts by weight of monomers,
wherein after film formation on a substrate the pressure-sensitive adhesive polymer has a gel content $gel_{tot}$ of at least 80% by weight based on a polymer film produced from the pressure-sensitive adhesive polymer,
wherein the gel content is at least partially based on a crosslinking of the keto or aldehyde groups of the polymer with compound A and the gel content $gel_K$ of the pressure-sensitive adhesive polymer based on crosslinking of the keto or aldehyde groups of the polymer with compound A is at least 30% by weight, wherein the gel content may in part also be based on covalent, irreversible crosslinking not effected by crosslinking of the keto or aldehyde groups of the polymer with compound A and the gel content $gel_0$ of the pressure-sensitive adhesive polymer based on covalent, irreversible crosslinking not effected by crosslinking of the keto or aldehyde groups of the polymer with compound A is from 0% to not more than 50% by weight, and
wherein the glass transition temperature of the polymer before crosslinking of the keto or aldehyde groups of the polymer with compound A is below 10°C, preferably below -15°C and above -40°C, wherein the gel content and the glass transition temperature are determined according to the methods disclosed in the description; and wherein after drying the pressure-sensitive adhesive composition forms a film having a tack of not less than 10 N/25mm measured as loop tack relative to a steel surface at 23°C, 50% relative humidity and at a tearoff speed of 300 mm/min.

**2.** Pressure-sensitive adhesive composition according to Claim 1, wherein after drying the pressure-sensitive adhesive composition forms a film having a peel strength greater than 5 N/25 mm relative to a polyethylene surface measured at 23°C, 50% relative humidity and at a tearoff speed of 300 mm/min.

**3.** Pressure-sensitive adhesive composition according to any of the preceding claims, wherein the pressure-sensitive adhesive polymer is formed from 65% to 94% by weight, based on the sum of the monomers, of at least one soft (meth)acrylic acid ester monomer selected from n-butyl acrylate, 2-ethylhexyl acrylate, n-hexyl acrylate, octyl acrylate, heptyl acrylate and ethyl acrylate.

**4.** Pressure-sensitive adhesive composition according to any of the preceding claims, wherein the pressure-sensitive adhesive polymer is formed from 0.5% to 6% by weight, based on the sum of the monomers, of monomers (ii) and wherein the monomers (ii) are selected from acrylic acid, methacrylic acid, itaconic acid and mixtures thereof.

**5.** Pressure-sensitive adhesive composition according to any of the preceding claims, wherein the pressure-sensitive adhesive polymer is formed from 6% to 18% by weight, based on the sum of the monomers, of styrene.

**6.** Pressure-sensitive adhesive composition according to any of the preceding claims, wherein the monomers (iv) are selected from the group consisting of acrolein, methacrolein, vinyl alkyl ketones having 1 to 20 carbon atoms in the alkyl radical, formylstyrene, (meth)acrylic acid alkyl esters having one or two keto- or aldehyde groups or having an aldehyde and a keto group in the alkyl radical, N-oxoalkyl (meth)acrylamides, acetoacetyl (meth)acrylate, acetoacetoxyethyl (meth)acrylate and diacetone acrylamide.

**7.** Pressure-sensitive adhesive composition according to any of the preceding claims, wherein the compound A is selected from the group consisting of compounds having hydrazide, hydroxylamine, oxime ether or amino groups.

**8.** Pressure-sensitive adhesive composition according to any of the preceding claims, wherein compound A is a dicarboxylic acid dihydrazide having 2 to 10 carbon atoms and wherein monomer (iv) is selected from acetoacetyl (meth)acrylate, acetoacetoxyethyl (meth)acrylate and diacetone acrylamide.

9. Pressure-sensitive adhesive composition according to any of the preceding claims, wherein compound A is adipic acid dihydrazide and wherein monomer (iv) is diacetone acrylamide.

10. Pressure-sensitive adhesive composition according to any of the preceding claims, wherein the molar ratio of the keto- or aldehyde-reactive groups of the compound A to the keto and aldehyde groups of compound K is from 1:10 to 2:1, preferably from 1:1.3 to 1.3:1.

11. Pressure-sensitive adhesive composition according to any of the preceding claims, wherein the optional monomers (v) are employed in amounts of 0% to 10% by weight based on the sum of the monomers and are monomers distinct from the monomers (i) to (iv) selected from the group consisting of C1 to C20 alkyl (meth)acrylates, monomers comprising hydroxyl groups, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds and (meth)acrylamides.

12. Pressure-sensitive adhesive composition according to any of the preceding claims, wherein the polymerization is carried out in the presence of 0.01 to 0.75 parts by weight of chain transfer agent per 100 parts by weight of monomers.

13. Pressure-sensitive adhesive composition according to any of the preceding claims, wherein the gel content $gel_K$ of the pressure-sensitive adhesive polymer based on crosslinking of the keto or aldehyde groups of the polymer with compound A is at least 50% by weight and the gel content $gel_0$ of the pressure-sensitive adhesive polymer based on covalent, irreversible crosslinking not based on crosslinking of the keto or aldehyde groups of the polymer with compound A is more than 0% and up to 30% by weight.

14. Pressure-sensitive adhesive composition according to any of the preceding claims, wherein the pressure-sensitive adhesive composition comprises at least one tackifier in an amount of 5 to 40 parts by weight based on 100 parts by weight of polymer, wherein the tackifier is preferably selected from natural and chemically modified colophony resins consisting predominantly of abietic acid or abietic acid derivatives or hydrogenated derivatives thereof.

15. Pressure-sensitive adhesive composition according to any of the preceding claims, wherein the pressure-sensitive adhesive polymer is formed from

(i) at least 65% by weight, based on the sum of the monomers, of at least one acrylic acid ester monomer selected from n-butyl acrylate and 2-ethylhexyl acrylate,
(ii) 0.5% to 8% by weight, based on the sum of the monomers, of at least one acid monomer selected from acrylic acid, methacrylic acid and itaconic acid,
(iii) 5% to 19% by weight, based on the sum of the monomers, of styrene,
(iv) 0.3% to 5% by weight, based on the total amount of monomers, of at least one ethylenically unsaturated compound having at least one keto group selected from the group consisting of acetoacetyl (meth)acrylate, acetoacetoxyethyl (meth)acrylate and diacetone acrylamide,
(v) 0% to 10% by weight, based on the sum of the monomers, of monomers distinct from the monomers (i) to (iv) selected from the group consisting of C1 to C20 alkyl (meth)acrylates, monomers comprising hydroxyl groups, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds,
wherein the pressure-sensitive adhesive polymer has a gel content $gel_{tot}$ of at least 80% by weight based on the polymer film,
wherein the gel content k of the pressure-sensitive adhesive polymer based on crosslinking of the keto or aldehyde groups of the polymer with compound A is at least 50% by weight,
and the gel content $gel_0$ of the pressure-sensitive adhesive polymer based on covalent, irreversible crosslinking not based on crosslinking of the keto or aldehyde groups of the polymer with compound A is more than 0% and up to 30% by weight,
and wherein the glass transition temperature of the pressure-sensitive adhesive polymer is below -15°C, wherein the gel content and the glass transition temperature are determined according to the methods disclosed in the description.

16. Use of a pressure-sensitive adhesive composition according to any of the preceding claims for producing adhesive labels, adhesive tapes or adhesive films.

**17.** Self-adhesive article coated with a pressure-sensitive adhesive composition according to any of Claims 1 to 15.

**18.** Process for producing a self-adhesive article by coating a substrate with a pressure-sensitive adhesive composition according to any of Claims 1 to 15.

## Revendications

**1.** Composition autoadhésive sous forme d'une dispersion aqueuse de polymère contenant

(a) au moins un agent tackifiant,
(b) au moins un composé A qui présente au moins deux groupes fonctionnels qui peuvent entrer en réaction de réticulation avec des groupes céto ou avec des groupes aldéhyde ;
(c) au moins un polymère autoadhésif qui est formé par polymérisation en émulsion de

(i) au moins 60 % en poids, par rapport à la somme des monomères, d'au moins un monomère de type ester d'acide (méth)acrylique souple qui, lorsqu'il est polymérisé en tant qu'homopolymère, présente une température de transition vitreuse inférieure à 0 °C,
(ii) 0,1 à 10 % en poids, par rapport à la somme des monomères, d'au moins un monomère comportant au moins un groupe de type acide,
(iii) au moins 5 et moins de 20 % en poids, par rapport à la somme des monomères, de styrène,
(iv) 0,3 à 5 % en poids, préférablement 0,4 à 3 % en poids, par rapport à la quantité totale de monomères, d'au moins un composé éthyléniquement insaturé K comportant au moins un groupe fonctionnel choisi parmi des groupes céto et des groupes aldéhyde ;
(v) éventuellement d'autres monomères différents de (i) à (iv), à l'exception de monomères comportant au moins deux groupes vinyle polymérisables non conjugués,
la polymérisation étant réalisée en présence de 0 à 1 partie en poids de régulateur de poids moléculaire par 100 parties en poids de monomères,
le polymère autoadhésif présentant, après la formation d'un film sur un substrat, une teneur en gel $Gel_{ges}$ d'au moins 80 % en poids, par rapport à un film de polymère préparé à partir du polymère autoadhésif,
la teneur en gel reposant au moins partiellement sur une réticulation des groupes céto ou des groupes aldéhyde du polymère avec le composé A et la teneur en gel reposant sur la réticulation des groupes céto ou des groupes aldéhyde du polymère avec le composé A, $Gel_K$, du polymère autoadhésif étant d'au moins 30 % en poids,
la teneur en gel pouvant également partiellement reposer sur une réticulation covalente, irréversible, non provoquée par la réticulation des groupes céto ou des groupes aldéhyde du polymère avec le composé A et la teneur en gel reposant sur la réticulation covalente, irréversible, non provoquée par la réticulation des groupes céto ou des groupes aldéhyde du polymère avec le composé A, $Gel_0$, du polymère autoadhésif étant de 0 à 50 % en poids ou moins, et
la température de transition vitreuse du polymère avant la réticulation des groupes céto ou des groupes aldéhyde du polymère avec le composé A étant inférieure à 10 °C, de préférence inférieure à -15 °C et supérieure à -40 °C, la teneur en gel et la température de transition vitreuse étant déterminées selon les procédés divulgués dans la description ; et
la composition autoadhésive formant, après séchage, un film doté d'une adhérence supérieure ou égale à 10 N/25 mm, mesurée en tant que Loop Tack par rapport à une surface d'acier à 23 °C, 50 % d'humidité relative de l'air et avec une vitesse d'enlèvement de 300 mm/min.

**2.** Composition autoadhésive selon la revendication 1, **caractérisée en ce que** la composition autoadhésive forme, après séchage, un film doté d'une résistance au pelage supérieure à 5 N/25 mm par rapport à une surface de polyéthylène, mesurée à 23 °C, 50 % d'humidité relative de l'air et avec une vitesse d'enlèvement de 300 mm/min.

**3.** Composition autoadhésive selon l'une quelconque des revendications précédentes, **caractérisée en ce que** le polymère autoadhésif est formé à partir de 65 à 94 % en poids, par rapport à la somme des monomères, d'au moins un monomère de type ester d'acide (méth)acrylique souple choisi parmi l'acrylate de n-butyle, l'acrylate de 2-éthylhexyle, l'acrylate de n-hexyle, l'acrylate d'octyle, l'acrylate d'heptyle et l'acrylate d'éthyle.

**4.** Composition autoadhésive selon l'une quelconque des revendications précédentes, **caractérisée en ce que** le polymère autoadhésif est formé à partir de 0,5 à 6 % en poids, par rapport à la somme des monomères, de monomères

(ii) et **en ce que** les monomères (ii) sont choisis parmi l'acide acrylique, l'acide méthacrylique, l'acide itaconique et leurs mélanges.

5. Composition autoadhésive selon l'une quelconque des revendications précédentes, **caractérisée en ce que** le polymère autoadhésif est formé à partir de 6 à 18 % en poids, par rapport à la somme des monomères, de styrène.

6. Composition autoadhésive selon l'une quelconque des revendications précédentes, **caractérisée en ce que** les monomères (iv) sont choisis dans le groupe constitué par l'acroléine, la méthacroléine, des vinylalkylcétones comportant 1 à 20 atomes de C dans le radical alkyle, le formylstyrène, des esters d'alkyle d'acide (méth)acrylique comportant un ou deux groupes céto ou groupes aldéhyde ou comportant un groupe aldéhyde et un groupe céto dans le radical alkyle, un N-oxoalkyl(méth)acrylamide, un (méth)acrylate d'acétoacétyle, un (méth)acrylate d'acétoacétatoxyéthyle et le diacétonacrylamide.

7. Composition autoadhésive selon l'une quelconque des revendications précédentes, **caractérisée en ce que** le composé A est choisi dans le groupe constitué par des composés comportant des groupes hydrazide, hydroxylamine, éther d'oxime ou amino.

8. Composition autoadhésive selon l'une quelconque des revendications précédentes, **caractérisée en ce que** le composé A est un dihydrazide d'acide dicarboxylique comportant 2 à 10 atomes de C, et **en ce que** le monomère (iv) est choisi parmi un (méth)acrylate d'acétoacétyle, un (méth)acrylate d'acétoacétatoxyéthyle et le diacétonacrylamide.

9. Composition autoadhésive selon l'une quelconque des revendications précédentes, **caractérisée en ce que** le composé A est le dihydrazide d'acide adipique et **en ce que** le monomère (iv) est le diacétonacrylamide.

10. Composition autoadhésive selon l'une quelconque des revendications précédentes, **caractérisée en ce que** le rapport molaire des groupes réactifs avec des groupes céto ou avec des groupes aldéhyde du composé A sur les groupes céto et les groupes aldéhyde du composé K est de 1 : 10 à 2 : 1, de préférence de 1 : 1,3 à 1,3 : 1.

11. Composition autoadhésive selon l'une quelconque des revendications précédentes, **caractérisée en ce que** les monomères éventuels (v) sont utilisés en des quantités de 0 à 10 % en poids, par rapport à la somme des monomères, et sont choisis dans le groupe constitué par des (méth)acrylates d'alkyle en C1 à C20 différents des monomères (i) à (iv), des monomères contenant des groupes hydroxyle, des esters de vinyle d'acides carboxyliques contenant jusqu'à 20 atomes de C, des composés aromatiques vinyliques comportant jusqu'à 20 atomes de C, des nitriles éthyléniquement insaturés, des halogénures de vinyle, des éthers de vinyle d'alcools contenant de 1 à 10 atomes de C, des hydrocarbures aliphatiques comportant 2 à 8 atomes de C et une ou deux doubles liaisons et des (méth)acrylamides.

12. Composition autoadhésive selon l'une quelconque des revendications précédentes, **caractérisée en ce que** la polymérisation est réalisée en présence de 0,01 à 0,75 partie en poids de régulateur de poids moléculaire par 100 parties en poids de monomères.

13. Composition autoadhésive selon l'une quelconque des revendications précédentes, **caractérisée en ce que** la teneur en gel reposant sur la réticulation des groupes céto ou des groupes aldéhyde du polymère avec le composé A, $Gel_K$, du polymère autoadhésif est d'au moins 50 % en poids, et la teneur en gel reposant sur une réticulation covalente, irréversible, non provoquée par la réticulation des groupes céto ou des groupes aldéhyde du polymère avec le composé A, $Gel_0$, du polymère autoadhésif étant supérieure à 0 et jusqu'à 30 % en poids.

14. Composition autoadhésive selon l'une quelconque des revendications précédentes, **caractérisée en ce que** la composition autoadhésive contient au moins un agent tackifiant en une quantité de 5 à 40 parties en poids, par rapport à 100 parties en poids de polymère, l'agent tackifiant étant de préférence choisi parmi des résines de colophane naturelles et modifiées chimiquement, constituées majoritairement d'acide abiétique, de dérivés d'acide abiétique ou de leurs dérivés hydrogénés.

15. Composition autoadhésive selon l'une quelconque des revendications précédentes, **caractérisée en ce que** le polymère autoadhésif est formé à partir de

(i) au moins 65 % en poids, par rapport à la somme des monomères, d'au moins un monomère de type ester

d'acide acrylique choisi parmi l'acrylate de n-butyle et l'acrylate de 2-éthylhexyle,
(ii) 0,5 à 8 % en poids, par rapport à la somme des monomères, d'au moins un monomère de type acide choisi parmi l'acide acrylique, l'acide méthacrylique et l'acide itaconique,
(iii) 5 à 19 % en poids, par rapport à la somme des monomères, de styrène,
(iv) 0,3 à 5 % en poids, par rapport à la somme totale des monomères, d'au moins un composé éthyléniquement insaturé comportant au moins un groupe céto, choisi dans le groupe constitué par un (méth)acrylate d'acétoacétyle, un (méth)acrylate d'acétoacétatoxyéthyle et le diacétonacrylamide,
(v) 0 à 10 % en poids, par rapport à la somme des monomères, de monomères choisis dans le groupe constitué par des (méth)acrylates d'alkyle en C1 à C20 différents des monomères (i) à (iv), des monomères contenant des groupes hydroxyle, des esters de vinyle d'acides carboxyliques contenant jusqu'à 20 atomes de C, des composés aromatiques vinyliques comportant jusqu'à 20 atomes de C, des nitriles éthyléniquement insaturés, des halogénures de vinyle, des éthers de vinyle d'alcools contenant de 1 à 10 atomes de C, des hydrocarbures aliphatiques comportant 2 à 8 atomes de C et une ou deux doubles liaisons,
le polymère autoadhésif présentant une teneur en gel $Gel_{ges}$ d'au moins 80 % en poids, par rapport au film de polymère,
la teneur en gel reposant sur la réticulation des groupes céto ou des groupes aldéhyde du polymère avec le composé A, $Gel_K$, du polymère autoadhésif étant d'au moins 50 % en poids,
et la teneur en gel reposant sur une réticulation covalente, irréversible, non provoquée par la réticulation des groupes céto ou des groupes aldéhyde du polymère avec le composé A, $Gel_0$, du polymère autoadhésif étant supérieure à 0 et jusqu'à 30 % en poids,
et la température de transition vitreuse du polymère autoadhésif étant inférieure à -15 °C, la teneur en gel et la température de transition vitreuse étant déterminées selon les procédés divulgués dans la description.

**16.** Utilisation d'une composition autoadhésive selon l'une quelconque des revendications précédentes pour la préparation d'étiquettes adhésives, de rubans adhésifs ou de feuilles adhésives.

**17.** Article autocollant, revêtu par une composition autoadhésive selon l'une quelconque des revendications 1 à 15.

**18.** Procédé de préparation d'un article autocollant dans lequel un substrat est revêtu par une composition autoadhésive selon l'une quelconque des revendications 1 à 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2017216108 A
- WO 2006066761 A
- EP 3202795 A
- WO 200301193 A
- EP 900651 A
- WO 2017125277 A
- JP 2005281548 A
- DE 2722097 A
- DE 2061213 A
- DE 2207209 A
- WO 2013117428 A
- WO 06066761 A


### In der Beschreibung aufgeführte Nicht-Patentliteratur


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **BRANDRUP, E.H. IMMERGUT.** Polymer Handbook. J. Wiley, 1966
- **J. BRANDRUP ; E.H. IMMERGUT.** Polymerhandbook. John Wiley & Sons, 1989, 133-141
- Makromolekulare Stoffe. **HOUBEN-WEYL.** Methoden der organischen Chemie. Georg-Thieme-Verlag, 1961, vol. XIV/1, 411-420
- *Adhesive Age,* Juli 1987, 19-23
- *Polym. Mater. Sci. Eng.,* 1989, vol. 61, 588-592